# EUROPEAN PATENT APPLICATION

(11) **EP 4 418 707 A1**
(43) Date of publication of application: **21.08.2024**
(21) Application number: 22897478.8
(22) Date of filing: 20.10.2022
(51) Int. Cl.: H04W 4/80, H04W 76/14, H04Q 9/00

(54) **DATA TRANSMISSION METHOD AND COMMUNICATION SYSTEM**

(30) Priority: 25.11.2021 CN 202111417993
(71) Applicant: Huawei Technologies Co., Ltd., Shenzhen, Guangdong 518129 (CN)
(72) Inventor: SHI, Rui, Shenzhen, Guangdong 518129 (CN); ZHANG, Kai, Shenzhen, Guangdong 518129 (CN); SONG, Lianxiang, Shenzhen, Guangdong 518129 (CN)
(74) Representative: Pfenning, Meinig & Partner mbB
(86) International application number: PCT/CN2022/126498
(87) International publication number: WO 2023/093395

(57) **Abstract**

This application discloses a data transmission method and a communication system. The method includes: A first home device sends a first message in a Bluetooth manner in response to receiving a first user input. A first terminal obtains a first identifier carried in the first message, and establishes a Bluetooth transmission channel with the first home device. The first home device sends usage record data to the first terminal through the Bluetooth transmission channel. The first terminal sends the usage record data to a server. In the entire data transmission process, a user only needs to start the first home device. In a working process of the first home device, the first home device automatically establishes the Bluetooth transmission channel with the first terminal, and the first home device automatically transmits data to the first terminal. The home device automatically transmits the data to the server without an additional operation of the user. This improves user experience.

## Description

This application claims priority to Chinese Patent Application No. 202111417993.9, filed with the China National Intellectual Property Administration on November 25, 2021 and entitled "DATA TRANSMISSION METHOD AND COMMUNICATION SYSTEM", which is incorporated herein by reference in its entirety.

### TECHNICAL FIELD

Embodiments of the present invention relate to the field of communication technologies, and in particular, to a data transmission method and a communication system.

### BACKGROUND

With rapid development of the Internet of things, more Internet of things devices appear in smart home devices. With a power consumption-sensitive requirement of the Internet of things devices, more Bluetooth low energy (Bluetooth low energy, BLE) devices emerge, such as a smart toothbrush, a smart cup, and a smart pillow. However, the BLE devices cannot connect to a server. Therefore, data generated by the BLE devices cannot be transmitted to the server.

To transmit the data generated by the BLE devices to the server, in an existing data transmission method, a user usually needs to manually complete a connection between a BLE device and a terminal on an application of the terminal after using the BLE device. After the terminal establishes the connection to the BLE, the BLE device transmits data to the terminal, and the terminal uploads, to the server, the data transmitted by the BLE device. It can be learned that when the BLE device needs to transmit the data to the server, the user needs to repeat the foregoing operations. Therefore, in the existing data transmission method, the user needs to perform complex operations to transmit the data on the BLE device to the server, and the operations are complex.

### SUMMARY

According to a data transmission method and a communication system provided in embodiments of this application, a BLE device can automatically transmit data to a server, and this simplifies operations.

To achieve the foregoing objective, the following technical solutions are used in embodiments of this application.

According to a first aspect, an embodiment of this application provides a data transmission method. The method is applied to a communication system, where the communication system includes a first home device, a first terminal, and a server, and the first home device includes a Bluetooth low energy module or has a Bluetooth low energy communication function. The method may include: The first home device sends a first message in a Bluetooth manner in response to receiving a first user input, where the first message includes a first identifier, the first identifier is pre-stored in the first terminal and the first home device, the first identifier is generated based on a first account, and the first account corresponds to the first terminal and the first home device. In response to receiving the first message, the first terminal obtains the first identifier, and establishes a Bluetooth transmission channel with the first home device. The first home device sends a second message to the first terminal through the Bluetooth transmission channel, where the second message includes first data, the first data includes usage record data of the first home device in first historical duration and the first identifier, and the first data is used to feed back usage record data of the first account in the first historical duration. In response to receiving the second message, the first terminal sends the first data to the server.

Optionally, the first user input is one user input.

In other words, in response to the first user input, the first home device starts to work, and the first home device sends the first message in the Bluetooth manner. The first terminal obtains the first identifier carried in the first message, and automatically establishes the Bluetooth transmission channel with the first home device. The first home device sends the usage record data of the first home device in the first historical duration to the first terminal through the Bluetooth transmission channel. The first terminal sends the usage record data to the server. It can be learned that in the entire data transmission process, the user only needs to start the first home device to work. In a working process of the first home device (that is, when the user uses the first home device), the first home device automatically establishes the Bluetooth transmission channel with the first terminal, and the first home device automatically transmits the first data to the first terminal. In the whole process, the user does not need to specifically perform complex operations to upload the data to the server, and the operations are simplified. The home device can automatically transmit data to the server without user awareness.

In addition, in this embodiment of this application, the first home device does not need to transmit the data to the server through a Bluetooth low energy gateway (BLE gateway), and the BLE gateway does not need to be additionally purchased. In this way, a series of problems existing in using the BLE gateway are avoided. For example, the BLE gateway still consumes energy when no data is transmitted, it is inconvenient for the BLE gateway to move when the BLE gateway is powered in a power plug manner, and a BLE device moving in a home environment cannot keep a constant connection to the BLE gateway. Therefore, the solution provided in this embodiment of this application is more practical.

In some implementations, the communication system further includes a second terminal, and the method may further include: In response to receiving a second user input, the first home device sends a third message in the Bluetooth manner, where the third message includes a second identifier, the second identifier is pre-stored in the second terminal and the first home device, the second identifier is generated based on a second user account, and the second user account corresponds to the second terminal and the first home device. In response to receiving the third message, the terminal obtains the second identifier, and establishes a Bluetooth transmission channel with the first home device. The first home device sends a fourth message to the second terminal through the Bluetooth transmission channel, where the fourth message includes second data, the second data includes usage record data of the first home device in second historical duration and the second identifier, and the second data is used to feed back usage record data of the second user account in the second historical duration. In response to receiving the fourth message, the second terminal sends the second data to the server. In this way, the first home device can identify different users. For different users, the first home device may transmit data used by the users to terminals of the users, and then the terminals of the users transmit the data to the server, so that a data transmission task may be shared on each terminal, and this effectively avoids a loss on a single terminal.

Optionally, the second user input is one user input.

In some implementations, the first account is in a one-to-one correspondence with the first terminal, and is in a one-to-one correspondence with the first home device.

In a specific implementation, that the first home device sends a first message in a Bluetooth manner in response to receiving a first user input is specifically as follows: The first home device sends the first message in a Bluetooth low energy manner in response to receiving the first user input.

In a specific implementation, the first user input includes any one of a start operation performed by the first user on the first home device, a turn-off operation performed by the first user on the first home device, a press operation performed by the first user on the first home device, and a touch operation performed by the first user on the first home device.

In a specific implementation, the first home device includes an identity recognition unit, and the identity recognition unit is configured to obtain a personal biometric feature of a user. That the first home device sends the first message in a Bluetooth manner in response to receiving the first user input may be specifically: in response to an operation performed by the first user on the identity recognition unit, the first home device determines, based on a personal biometric feature of the first user obtained by the identity recognition unit, that the first user corresponds to the first account. The first home device sends the first message in the Bluetooth manner.

In a specific implementation, the first home device includes any one of a smart toothbrush, a smart cup, and a smart pillow.

In a specific implementation, the first home device includes the smart toothbrush, and the first data includes: one or more of tooth brushing duration, a tooth brushing mode, a tooth brushing start, a tooth brushing strength, and a tooth brushing score.

In a specific implementation, that the first home device sends a first message in a Bluetooth manner in response to receiving the first user input may be specifically: The smart toothbrush sends the first message in a Bluetooth manner in response to receiving an operation performed by the first user on a start button of the smart toothbrush.

In a specific implementation, the first home device includes a smart cup, and the first data includes one or more of a daily water intake amount, an average water intake amount in a week, and a water intake target of the user.

In a specific implementation, that the first home device sends a first message in a Bluetooth manner in response to receiving the first user input may be specifically: The smart cup sends the first message in a Bluetooth manner in response to receiving an operation of opening a cup cover of the smart cup by the first user.

In a specific implementation, the first home device includes a smart pillow, and the first data includes one or more of sleep time, sleep duration, a sleep habit, a sleep score, a sleep problem analysis, and a sleep improvement suggestion.

In a specific implementation, that the first home device sends a first message in a Bluetooth manner in response to receiving the first user input may be specifically: The smart pillow sends the first message in a Bluetooth manner in response to receiving a press operation performed by a head of the first user on the smart pillow.

In some implementations, before the first home device sends a first message in a Bluetooth manner in response to receiving a first user input, the method may further include: The first home device sends a fifth message in a Bluetooth manner in response to receiving a third user input, where the fifth message includes device information of the first home device. In response to receiving the fifth message, the first terminal obtains the device information of the first home device. The first terminal sends a first request to the server, where the first request is used to request the server to register with the first home device by using the device information of the first home device, and the first request carries the device information of the first home device. The server registers with the first home device based on the first request, generates registration completion information after the registration is completed, and sends the registration completion information to the first terminal. The first terminal receives the registration completion information sent by the server. It can be learned that, the first terminal may replace the first home device to request registration from the server. In a registration process of the first home device, registration can be completed without user intervention, and automatic registration is implemented.

In a specific implementation, the device information of the first home device includes one or more of a device type, a physical address, and a serial number.

In some implementations, after the server registers with the first home device based on the first request, the method may further include: The server generates the first identifier based on the first account. The server separately sends the first identifier to the first terminal. The first terminal receives the first identifier, and stores the first identifier. The first terminal sends the first identifier to the first home device. The first home device receives the first identifier, and stores the first identifier.

In some implementations, after the server registers with the first home device based on the first request, the method further includes: The server allocates the first access credential to the first terminal and the first home device. The server sends the first access credential to the first terminal. The first terminal receives the first access credential, and sends the first access credential to the first home device.

In some implementations, before the first home device sends a second message to the first terminal through a Bluetooth transmission channel, the method may further include: The first home device encrypts a to-be-sent message by using the first access credential, to obtain the second message. Before the first terminal sends first data to the server in response to receiving the second message, the method may further include: The first terminal receives, through a Bluetooth transmission channel, the second message sent by the first home device. The first terminal decrypts the second message by using the first access credential, to obtain the first data. In this embodiment of this application, transmitted data is encrypted, so that communication between the first terminal and the first home device is more secure.

In a specific implementation, in response to receiving the first message, that the first terminal obtains the first identifier and establishes the Bluetooth transmission channel with the first home device may be specifically: The first terminal establishes the Bluetooth transmission channel with the first home device based on the first identifier and a first condition that the first terminal and the first home device meet.

In a specific implementation, the first condition may include that a distance between the first terminal and the first home device is less than or equal to a first preset distance; or a distance between the first terminal and the first home device is less than or equal to a first preset distance, and there is no obstacle between the first terminal and the first home device.

In some implementations, after the first terminal sends first data to the server in response to receiving the second message, the method may further include: The first terminal disconnects the Bluetooth transmission channel from the first home device.

According to a second aspect, an embodiment of this application provides a data transmission method, applied to a first home device, where the first home device includes a Bluetooth low energy module or has a Bluetooth low energy communication function, and the method includes: The first home device sends a first message in a Bluetooth manner in response to receiving a first user input, where the first message includes a first identifier, the first identifier is pre-stored in the first terminal and the first home device, the first identifier is generated based on a first account, and the first account corresponds to the first terminal and the first home device. After the first terminal establishes a Bluetooth transmission channel to the first home device based on the first identifier, the first home device sends a second message to the first terminal through the Bluetooth transmission channel, where the second message includes first data, and the first data includes usage record data of the first home device in first historical duration and the first identifier; and the first data is used to feed back usage record data of the first account in the first historical duration. The first terminal is configured to send the first data to a server in response to receiving the second message.

In some implementations, the first user input includes any one of a start operation performed by a first user on the first home device, a turn-off operation performed by the first user on the first home device, a press operation performed by the first user on the first home device, and a touch operation performed by the first user on the first home device.

In some implementations, the first account is in a one-to-one correspondence with the first terminal, and is in a one-to-one correspondence with the first home device.

In a specific implementation, that the first home device sends a first message in a Bluetooth manner in response to receiving the first user input is specifically: The first home device sends the first message in a Bluetooth low energy manner in response to receiving the first user input.

In a specific implementation, the first home device includes an identity recognition unit, and the identity recognition unit is configured to obtain a personal biometric feature of a user. That the first home device sends the first message in a Bluetooth manner in response to receiving the first user input may be specifically: in response to an operation performed by the first user on the identity recognition unit, the first home device determines, based on a personal biometric feature of the first user obtained by the identity recognition unit, that the first user corresponds to the first account. The first home device sends the first message in the Bluetooth manner.

In a specific implementation, the first home device includes any one of a smart toothbrush, a smart cup, and a smart pillow.

In a specific implementation, the first home device includes the smart toothbrush, and the first data includes: one or more of tooth brushing duration, a tooth brushing mode, a tooth brushing start, a tooth brushing strength, and a tooth brushing score.

In a specific implementation, that the first home device sends a first message in a Bluetooth manner in response to receiving the first user input may be specifically: The smart toothbrush sends the first message in a Bluetooth manner in response to receiving an operation performed by the first user on a start button of the smart toothbrush.

In a specific implementation, the first home device includes a smart cup, and the first data includes one or more of a daily water intake amount, an average water intake amount in a week, and a water intake target of the user.

In a specific implementation, that the first home device sends a first message in a Bluetooth manner in response to receiving the first user input may be specifically: The smart cup sends the first message in a Bluetooth manner in response to receiving an operation of opening a cup cover of the smart cup by the first user.

In a specific implementation, the first home device includes a smart pillow, and the first data includes one or more of sleep time, sleep duration, a sleep habit, a sleep score, a sleep problem analysis, and a sleep improvement suggestion.

In a specific implementation, that the first home device sends a first message in a Bluetooth manner in response to receiving the first user input may be specifically: The smart pillow sends the first message in a Bluetooth manner in response to receiving a press operation performed by a head of the first user on the smart pillow.

In a specific implementation, the device information of the first home device includes one or more of a device type, a physical address, and a serial number.

In some implementations, before the first home device sends a second message to the first terminal through a Bluetooth transmission channel, the method may further include: The first home device encrypts a to-be-sent message by using the first access credential, to obtain the second message. In this embodiment of this application, transmitted data is encrypted, so that communication between the first terminal and the first home device is more secure.

According to a third aspect, an embodiment of this application provides a data transmission method, applied to a first terminal, and the method includes: in response to receiving a first message, the first terminal obtains a first identifier, and establishes a Bluetooth transmission channel with a first home device; the first message is sent by the first home device in a Bluetooth manner in response to receiving a first user input, where the first message includes the first identifier, the first identifier is pre-stored in the first terminal and the first home device, and the first identifier is generated based on a first account, and the first account corresponds to the first terminal and the first home device. The first terminal receives a second message sent by the first home device through the Bluetooth transmission channel, where the second message includes first data, the first data includes usage record data of the first home device in first historical duration and the first identifier, and the first data is used to feed back usage record data of the first account in the first historical duration. In response to receiving the second message, the first terminal sends the first data to the server.

In some implementations, the first account is in a one-to-one correspondence with the first terminal, and is in a one-to-one correspondence with the first home device.

In a specific implementation, the first user input includes any one of a start operation performed by the first user on the first home device, a turn-off operation performed by the first user on the first home device, a press operation performed by the first user on the first home device, and a touch operation performed by the first user on the first home device.

In some implementations, before the first terminal obtains the first identifier in response to receiving the first message, and establishes the Bluetooth transmission channel with the first home device, the method may further include: The first terminal obtains device information of the first home device in response to receiving a fifth message. The first terminal sends a first request to the server, where the first request is used to request the server to register with the first home device by using the device information of the first home device, and the first request carries the device information of the first home device. The device information of the first home device is carried in the fifth message, and the fifth message is sent by the first home device in a Bluetooth manner in response to receiving a third user input. The first terminal receives registration completion information sent by the server. The registration completion information is generated after the server registers with the first home device based on the first request and completes registration. It can be learned that, the first terminal may replace the first home device to request registration with the server. In a registration process of the first home device, registration can be completed without user intervention, and automatic registration is implemented.

In some implementations, after the server registers with the first home device based on the first request, the method may further include: The server generates the first identifier based on the first account. The server sends the first identifier to the first terminal. The first terminal receives the first identifier, and stores the first identifier. The first terminal sends the first identifier to the first home device. The first home device receives the first identifier, and stores the first identifier.

In some implementations, after the server registers with the first home device based on the first request, the method further includes: The server allocates the first access credential to the first terminal and the first home device. The server sends the first access credential to the first terminal. The first terminal receives the first access credential, and sends the first access credential to the first home device.

In some implementations, before the first home device sends a second message to the first terminal through a Bluetooth transmission channel, the method may further include: The first home device encrypts a to-be-sent message by using the first access credential, to obtain the second message. Before the first terminal sends first data to the server in response to receiving the second message, the method may further include: The first terminal receives, through a Bluetooth transmission channel, the second message sent by the first home device. The first terminal decrypts the second message by using the first access credential, to obtain the first data. In this embodiment of this application, transmitted data is encrypted, so that communication between the first terminal and the first home device is more secure.

In a specific implementation, in response to receiving the first message, that the first terminal obtains the first identifier and establishes the Bluetooth transmission channel with the first home device may be specifically: The first terminal establishes the Bluetooth transmission channel with the first home device based on the first identifier and a first condition that the first terminal and the first home device meet.

In a specific implementation, the first condition may include that a distance between the first terminal and the first home device is less than or equal to a first preset distance; or a distance between the first terminal and the first home device is less than or equal to a first preset distance, and there is no obstacle between the first terminal and the first home device.

In some implementations, after the first terminal sends first data to the server in response to receiving the second message, the method may further include: The first terminal disconnects the Bluetooth transmission channel from the first home device.

According to a fourth aspect, an embodiment of this application provides a home device, where the home device includes a Bluetooth low energy module or has a Bluetooth low energy communication function, the home device includes one or more processors and a memory, the memory stores code, and when the code is executed by the processor, the home device is enabled to perform the method in the second aspect.

According to a fifth aspect, an embodiment of this application provides a terminal, where the terminal includes one or more processors and a memory, the memory stores code, and when the code is executed by the processor, the terminal is enabled to perform the method in the third aspect.

According to a sixth aspect, an embodiment of this application provides a communication system. The communication system includes a first home device, a first terminal, and a server, and the first home device includes a Bluetooth low energy module or has a Bluetooth low energy communication function.

The first home device is configured to perform the following operations: in response to receiving a first user input, the first home device sends a first message in a Bluetooth manner, where the first message includes a first identifier, the first identifier is pre-stored in the first terminal and the first home device, the first identifier is generated based on a first account, and the first account corresponds to the first terminal and the first home device. After the first terminal establishes a Bluetooth transmission channel with the first home device based on the first identifier; the first home device sends a second message to the first terminal through the Bluetooth transmission channel, where the second message includes first data, the first data includes usage record data of the first home device in first historical duration and the first identifier, and the first data is used to feed back usage record data of the first account in the first historical duration.

The first terminal is configured to perform the following operations: in response to receiving a first message, the first terminal obtains the first identifier, and establishes a Bluetooth transmission channel with the first home device; the first message is sent by the first home device in a Bluetooth manner in response to receiving a first user input, where the first message includes the first identifier, the first identifier is pre-stored in the first terminal and the first home device, and the first identifier is generated based on a first account, and the first account corresponds to the first terminal and the first home device. The first terminal receives a second message sent by the first home device through the Bluetooth transmission channel, where the second message includes first data, the first data includes usage record data of the first home device in first historical duration and the first identifier, and the first data is used to feed back usage record data of the first account in the first historical duration. In response to receiving the second message, the first terminal sends the first data to the server.

According to a seventh aspect, an embodiment of this application provides a chip system. The chip system is used in an electronic device. The chip system includes one or more interface circuits and one or more processors. The interface circuit and the processor are interconnected through a line. The interface circuit is configured to receive a signal from a memory of the electronic device, and send the signal to the processor. The signal includes computer instructions stored in the memory. When the processor executes the computer instructions, the electronic device is enabled to perform the data transmission method according to the first aspect.

According to an eighth aspect, an embodiment of this application provides a computer storage medium, including computer instructions. When the computer instructions are run on an electronic device and a server, the electronic device is enabled to perform the data transmission method according to the first aspect.

According to a ninth aspect, an embodiment of this application provides a computer program product. When the computer program product is run on a computer, the computer is enabled to perform the data transmission method according to the first aspect.

For beneficial effects corresponding to the foregoing other aspects, refer to the descriptions of the beneficial effects in the method aspects.

In this embodiment of this application, in response to the first user input, the first home device starts to work, and the first home device sends the first message in a Bluetooth manner. The first terminal obtains the first identifier carried in the first message, and automatically establishes the Bluetooth transmission channel with the first home device. The first home device sends the usage record data of the first home device in the first historical duration to the first terminal through the Bluetooth transmission channel. The first terminal sends the usage record data to the server. It can be learned that in the entire data transmission process, the user only needs to start the first home device to work. In the process of the first home device to work (that is, when the user uses the first home device), the first home device automatically establishes the Bluetooth transmission channel with the first terminal, and the first home device automatically transmits the first data to the first terminal. In the whole process, the user does not need to specifically perform complex operations to upload the data to the server, and the operation is simplified. The home device can automatically transmit data to the server without user awareness.

### BRIEF DESCRIPTION OF DRAWINGS

To explain technical solutions in embodiments of this application more clearly, the following briefly describes accompanying drawings used for describing the embodiments or the conventional technology. It is clear that the accompanying drawings in the following descriptions show merely some embodiments of this application, and a person of ordinary skill in the art may still derive other drawings from these accompanying drawings without creative efforts.
FIG. 1 is a schematic diagram of an interface of a terminal;
FIG. 2 is a schematic diagram of another interface of a terminal;
FIG. 3 is a schematic diagram of another interface of a terminal;
FIG. 4 is a schematic diagram of another interface of a terminal;
FIG. 5 is a schematic diagram of another interface of a terminal;
FIG. 6 is a schematic diagram of another interface of a terminal;
FIG. 7 is a schematic diagram of another interface of a terminal;
FIG. 8 is a schematic diagram of another interface of a terminal;
FIG. 9 is a schematic diagram of another interface of a terminal;
FIG. 10 is a schematic diagram of another interface of a terminal;
FIG. 11 is a schematic diagram of a structure of a system according to an embodiment of this application;
FIG. 12 is a schematic diagram of a structure of a terminal according to an embodiment of this application;
FIG. 13A and FIG. 13B are a schematic flowchart of a data transmission method according to an embodiment of this application; and
FIG. 14A and FIG. 14B are a schematic flowchart of a data transmission method according to an embodiment of this application.

### DESCRIPTION OF EMBODIMENTS

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the description of this embodiment, unless otherwise stated, "a plurality of" means two or more than two.

Currently, a data transmission method is usually as follows: After a user uses a home device (for example, a BLE device), the user manually completes a connection between the BLE device and a terminal on an application of the terminal. After the terminal establishes the connection to the BLE, the BLE device transmits data to the terminal, and the terminal uploads, to a server, the data transmitted by the BLE device.

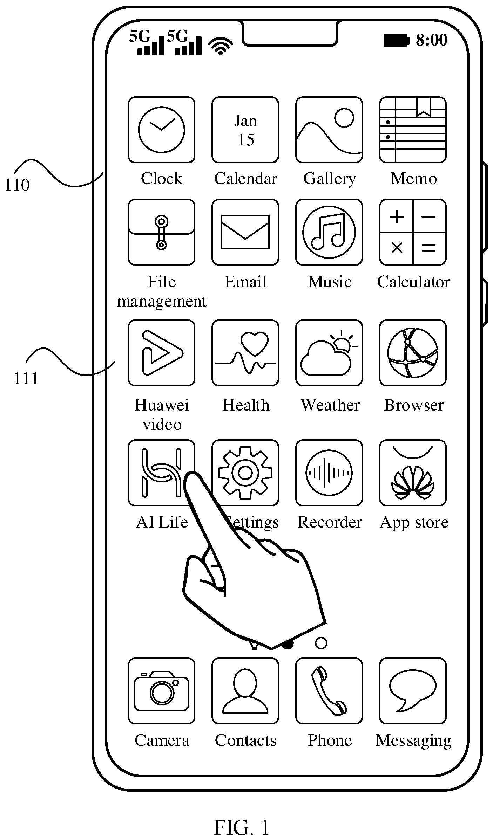

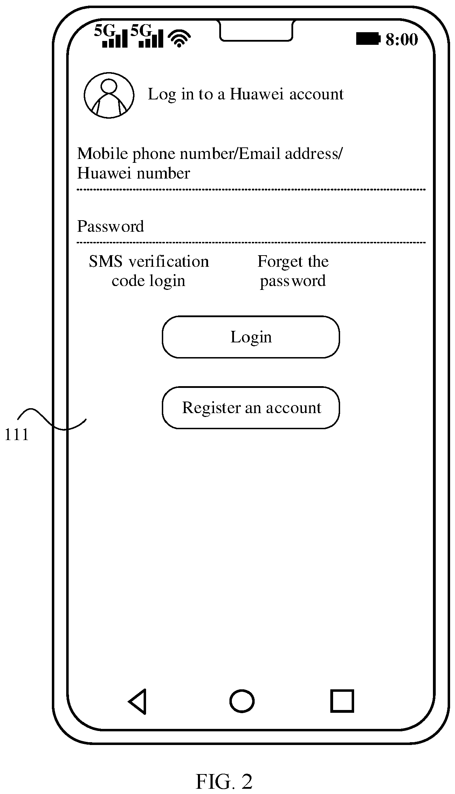

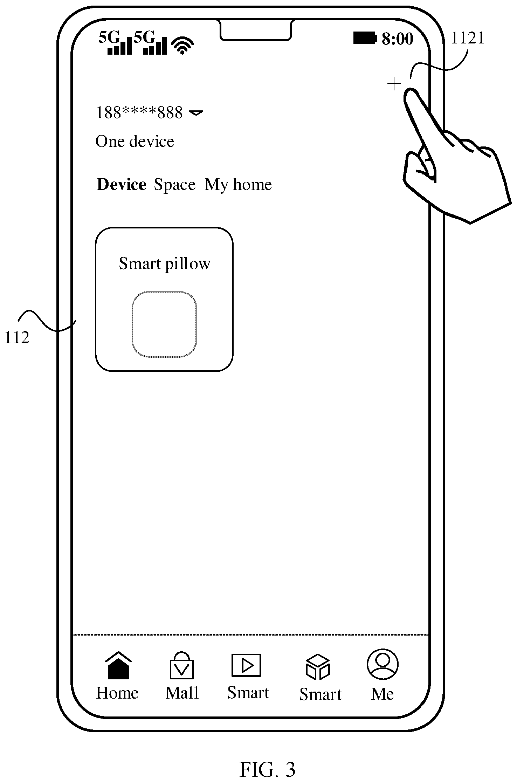

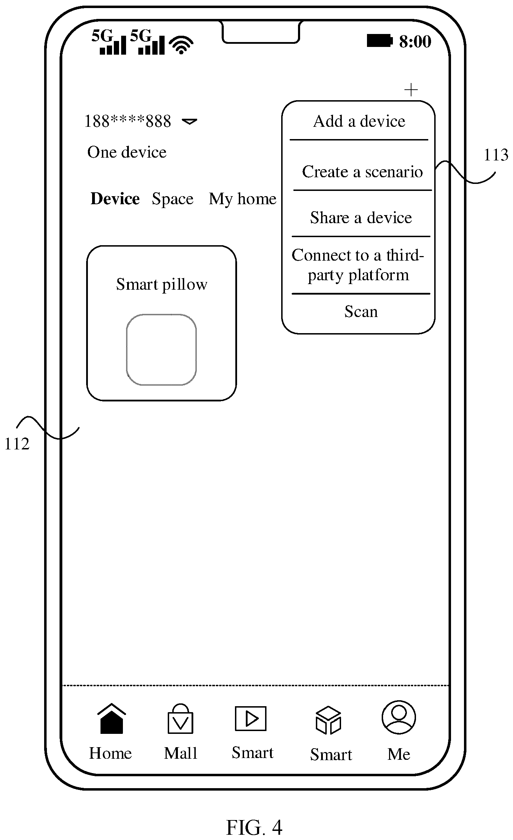

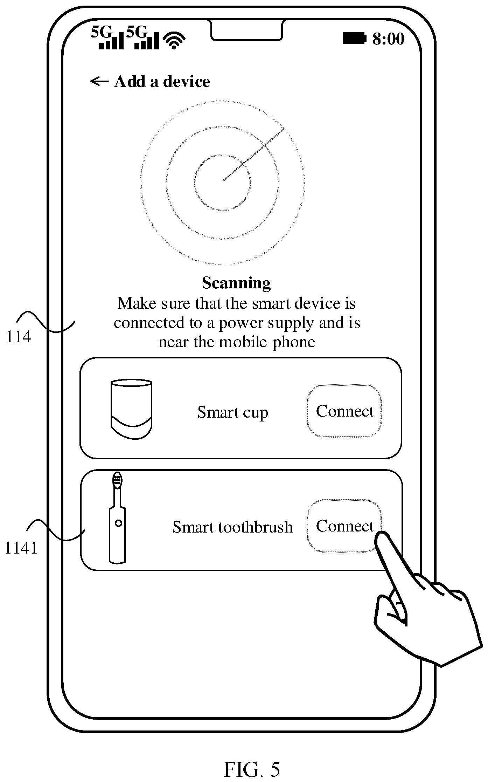

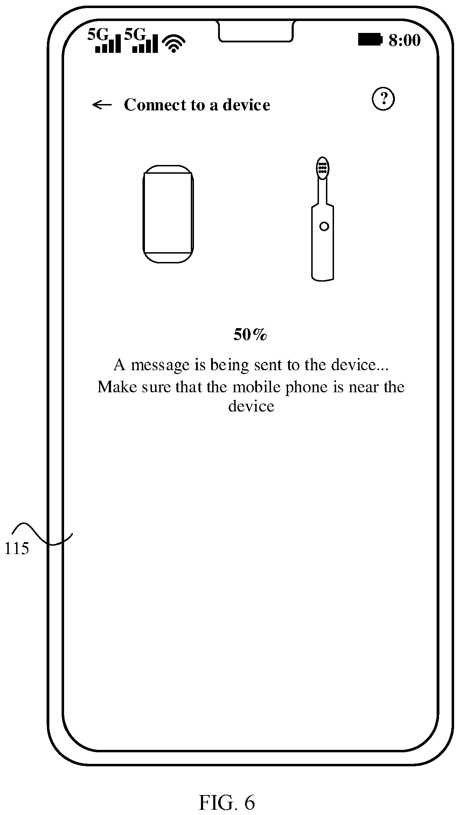

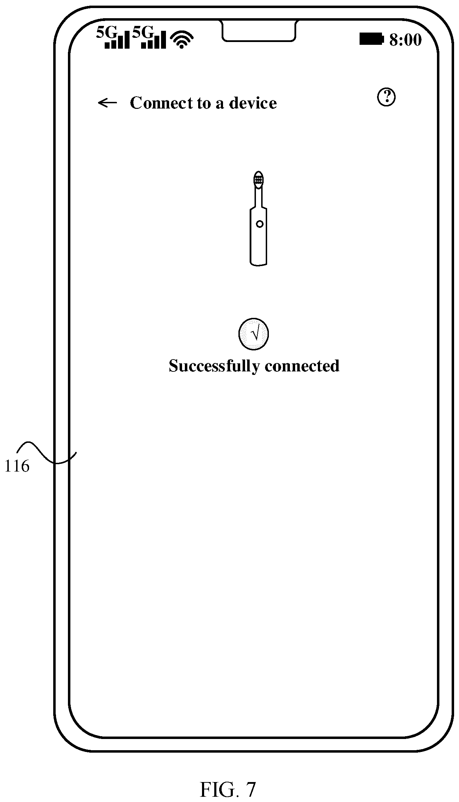

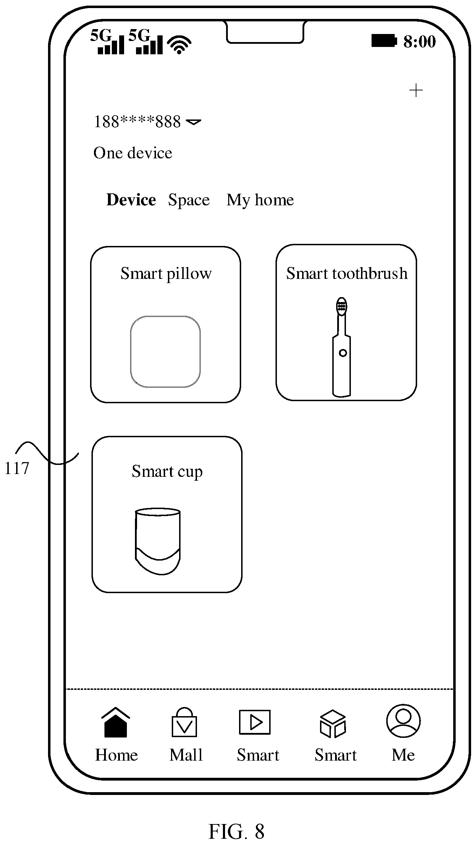

For example, after the user uses the BLE device, the user wants to upload updated data on the BLE device to the server. The user needs to manually establish a data transmission channel between the BLE device and the terminal. For example, FIG. 1 is a schematic diagram of a home screen of a terminal. A user taps an application (for example, an AI Life application) on the terminal 110. The AI Life application is started. The terminal 110 displays an interface 111 shown in FIG. 2. The user enters a user account (for example, a Huawei account) and a password on the interface 111, and taps a "Login" control. The interface of the terminal 110 jumps from the interface 111 shown in FIG. 2 to an interface 112 shown in FIG. 3. ABLE device, like a pillow, is displayed on the interface 112. A control 1121 is further displayed on the interface 112. When the user taps the control 1121, as shown in FIG. 4, a control 113 is displayed on the interface 112 of the terminal 110. After the user taps an "Add a device" option on the control 113, the interface 112 of the terminal 110 becomes an interface 114 shown in FIG. 5. The interface 114 indicates that the terminal 110 is scanning a BLE device, and displays scanned BLE devices, such as a cup and a smart toothbrush. When the user taps a "Connect" control on a smart toothbrush 1141 on the interface 114 of the terminal 110, the interface of the terminal 110 jumps from the interface 114 shown in FIG. 5 to an interface 115 shown in FIG. 6. A progress of a connection between the terminal 110 and the smart toothbrush is displayed on the interface 115. When the terminal 110 is successfully connected to the BLE device, the terminal 110 receives data sent by the smart toothbrush, and uploads the data to the server. In addition, the terminal 110 displays an interface 116 shown in FIG. 7. After the BLE device is successfully connected, a card of the smart toothbrush is added to the interface 112 shown in FIG. 3, to obtain an interface 117 shown in FIG. 8.

In the foregoing process of data transmission between the BLE device and the server, after the user uses the smart toothbrush, the user needs to tap an icon of an application (for example, the AI Life application) shown in FIG. 1 to start the application; the user needs to operate the user login interface shown in FIG. 2 to log in to the application; the user needs to tap the control 1121 shown in FIG. 3 and tap the control 113 shown in FIG. 4 to add the BLE device; and the user needs to tap the "Connect" control on the smart toothbrush 1141 shown in FIG. 5, to establish a connection between the smart toothbrush and the terminal 110. It can be learned that the user needs to participate in the entire process of data transmission between the BLE device and the server. In addition, each time the BLE device needs to perform data transmission with the server, the user needs to repeat the foregoing operations, and the operations are complex. Therefore, in an existing data transmission method, the user needs to perform complex operations to transmit the data on the BLE to the server, and the operations are complex.

To resolve the foregoing technical problem, in embodiments of this application, a first home device receives a first user input. In response to the first user input, the first home device starts to work, and the first home device sends a first message in a Bluetooth manner, where the first message includes a first identifier, the first identifier is pre-stored in a first terminal and the first home device, the first identifier is generated based on a first account, and the first account corresponds to the first terminal and the first home device. In response to receiving the first message, the first terminal obtains the first identifier, and establishes a Bluetooth transmission channel with the first home device. The first home device sends a second message to the first terminal through the Bluetooth transmission channel, where the second message includes first data, the first data includes usage record data of the first home device in first historical duration and the first identifier, and the first data is used to feed back usage record data of the first account in the first historical duration. In response to receiving the second message, the first terminal sends the first data to the server.

In other words, in response to the first user input, the first home device starts to work, and the first home device sends the first message in the Bluetooth manner. The first terminal obtains the first identifier carried in the first message, and automatically establishes the Bluetooth transmission channel with the first home device. The first home device sends the usage record data of the first home device in the first historical duration to the first terminal through the Bluetooth transmission channel. The first terminal sends the usage record data to the server. It can be learned that in the entire data transmission process, the user only needs to start the first home device to work. In a working process of the first home device (that is, when the user uses the first home device), the first home device automatically establishes the Bluetooth transmission channel with the first terminal, and the first home device automatically transmits the first data to the first terminal. In the whole process, the user does not need to specifically perform complex operations to upload the data to the server, and the operations are simplified. The home device can automatically transmit the data to the server without user awareness.

In addition, in embodiments of this application, the first home device does not need to transmit the data to the server through a Bluetooth low energy gateway (BLE gateway), and the BLE gateway does not need to be additionally purchased. In this way, a series of problems existing in using the BLE gateway are avoided. For example, the BLE gateway still consumes energy when no data transmission is performed, it is inconvenient for the BLE gateway to move when the BLE gateway is powered in a power plug manner, and a BLE device moving in a home environment cannot keep a constant connection to the BLE gateway. Therefore, the solution provided in embodiments of this application is more practical.

In some embodiments, when a plurality of persons share one home device, the home device may transmit data to different terminals based on different users. Specifically, the data transmission method provided in embodiments of this application may further include: In response to receiving a second user input, the first home device sends a third message in the Bluetooth manner, where the third message includes a second identifier, the second identifier is pre-stored in a second terminal and the first home device, the second identifier is generated based on a second user account, and the second user account corresponds to the second terminal and the first home device. In response to receiving the third message, the terminal obtains the second identifier, and establishes a Bluetooth transmission channel with the first home device. The first home device sends a fourth message to the second terminal through the Bluetooth transmission channel, where the fourth message includes second data, the second data includes usage record data of the first home device in second historical duration and the second identifier, and the second data is used to feed back usage record data of the second user account in the second historical duration. In response to receiving the fourth message, the second terminal sends the second data to the server. In this way, the first home device can identify different users. For different users, the first home device may transmit data used by the users to terminals of the users, and then the terminals of the users transmit the data to the server, so that a data transmission task may be shared on each terminal, and this effectively avoids a loss on a single terminal.

In some embodiments, before the first home device sends the first message in the Bluetooth manner in response to receiving the first user input, the data transmission method provided in embodiments of this application may further include: The first home device sends a fifth message in the Bluetooth manner in response to receiving a third user input, where the fifth message includes device information of the first home device. In response to receiving the fifth message, the first terminal obtains the device information of the first home device. The first terminal sends a first request to the server, where the first request is used to request the server to register with the first home device by using the device information of the first home device, and the first request carries the device information of the first home device. The server registers with the first home device based on the first request, generates registration completion information after the registration is completed, and sends the registration completion information to the first terminal. The first terminal receives the registration completion information sent by the server. The registration completion information may carry the first identifier. It can be learned that, the first terminal may replace the first home device to request registration from the server. In a registration process of the first home device, registration can be completed without user intervention, and automatic registration is implemented.

In actual application, the first home device (for example, a first BLE device) may be a smart toothbrush, a smart cup, or a smart pillow. Certainly, the first home device may alternatively be another smart device, for example, a smart yoga mat. This is not specifically limited in embodiments of this application.

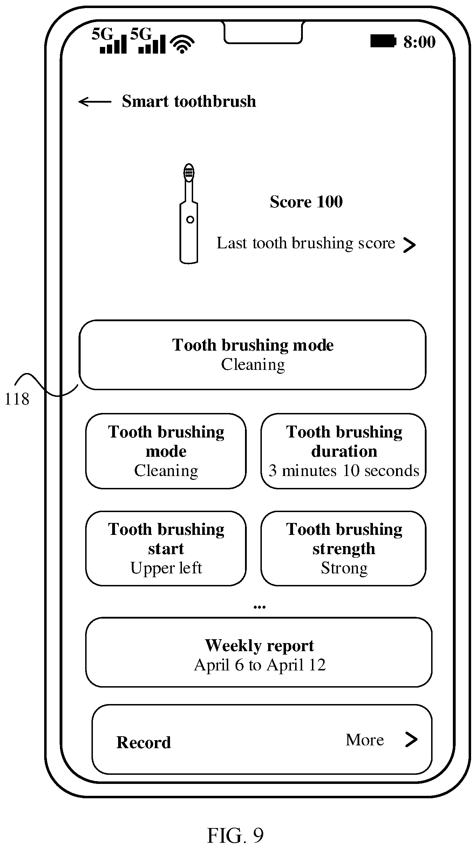

For example, the first BLE device is a smart toothbrush, and the smart toothbrush and the first terminal (for example, a mobile phone) are bound to the first account. When the user starts the smart toothbrush to brush teeth, the smart toothbrush sends the first message (for example, a Bluetooth broadcast) to the first terminal (for example, the mobile phone), where the Bluetooth broadcast carries the first identifier, and the first identifier is generated based on the first account. The mobile phone receives the Bluetooth broadcast, and obtains the first identifier carried in the Bluetooth broadcast. The mobile phone determines that the first identifier is consistent with a stored identifier. The mobile phone establishes a connection channel (namely, a Bluetooth transmission channel) with the smart toothbrush. The smart toothbrush sends the first data to the mobile phone through the connection channel. For example, the first data may include data such as brushing duration, a brushing start position, a brushing mode, and brushing strength. After the mobile phone receives the data, as shown in FIG. 9, the mobile phone displays the data, and reports the data to the server. In this way, in the entire data transmission process, the user only needs to start the smart toothbrush to brush teeth. In a tooth brushing process of the user, the smart toothbrush automatically establishes the Bluetooth transmission channel with the mobile phone, and the smart toothbrush automatically transmits the first data to the mobile phone. In the entire process, the user does not need to specifically perform complex operations to upload the data to the server, and the operations are simplified. The smart toothbrush can automatically transmit the data to the server without user awareness.

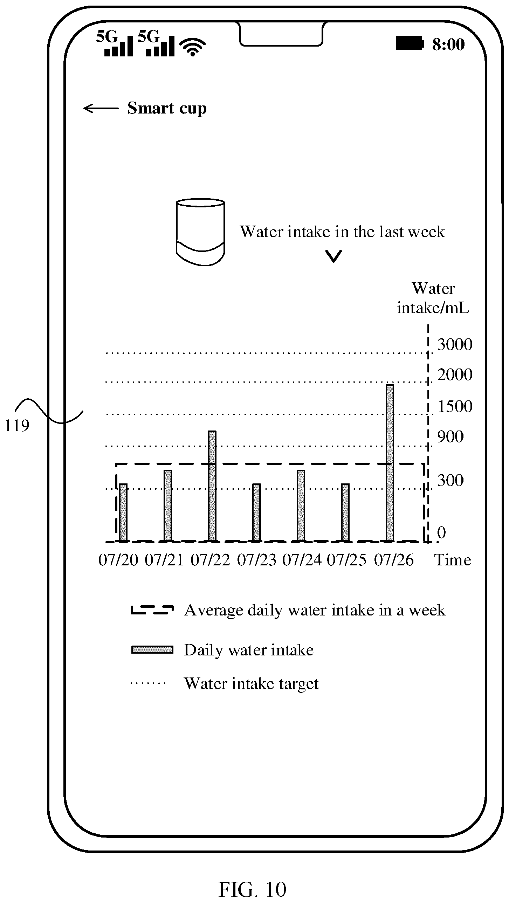

Similarly, for example, the first BLE device is a smart cup, and the smart cup and the terminal (for example, a mobile phone) are bound to the first account. When the user opens a cover of the smart cup, the smart cup sends the first message (for example, a Bluetooth broadcast) to the terminal (for example, the mobile phone), where the Bluetooth broadcast carries the first identifier, and the first identifier is generated based on the first account. The mobile phone receives the Bluetooth broadcast, and obtains the first identifier carried in the Bluetooth broadcast. The mobile phone determines that the first identifier is consistent with a stored identifier. The mobile phone establishes a connection channel (namely, the Bluetooth transmission channel) with the smart cup. The smart cup sends the first data to the mobile phone through the connection channel. For example, the first data may include data such as a water intake amount and a water temperature. After the mobile phone receives the data, as shown in FIG. 10, the mobile phone may display the data, and reports the data to the server. In this way, in the entire data transmission process, the user only needs to open the cup cover of the smart cup. When the user drinks water by using the smart cup, the smart cup automatically establishes the Bluetooth transmission channel with the mobile phone, and the smart cup automatically transmits the first data to the mobile phone. In the entire process, the user does not need to specifically perform complex operations to upload the data to the server, and the operations are simplified. The smart cup can automatically transmit the data to the server without user awareness.

Similarly, for example, the first BLE device is a smart pillow, and the smart pillow and the terminal (for example, a mobile phone) are bound to the first account. When the user presses the smart pillow, the smart pillow sends the first message (for example, a Bluetooth broadcast) to the terminal (for example, the mobile phone), where the Bluetooth broadcast carries the first identifier, and the first identifier is generated based on the first account. The mobile phone receives the Bluetooth broadcast, and obtains the first identifier carried in the Bluetooth broadcast. The mobile phone determines that the first identifier is consistent with a stored identifier. The mobile phone establishes a connection channel (namely, the Bluetooth transmission channel) with the smart pillow. The smart pillow sends the first data to the mobile phone through the connection channel. The first data may include data such as sleep duration and sleep quality. After receiving the data, the mobile phone reports the data to the server. In this way, in the entire data transmission process, the user only needs to press the smart pillow. When the head of the user is pillowed on the smart pillow, the smart pillow automatically establishes the Bluetooth transmission channel with the mobile phone, and the smart pillow automatically transmits the first data to the mobile phone. In the entire process, the user does not need to specifically perform complex operations to upload the data to the server, and the operations are simplified. The smart pillow can automatically transmit the data to the server without user awareness.

It should be noted herein that a trigger condition for triggering the first BLE device to send a broadcast may vary with different types of BLE devices. This is not specifically limited in embodiments of this application. In a specific implementation, the trigger condition may be set based on an actual requirement.

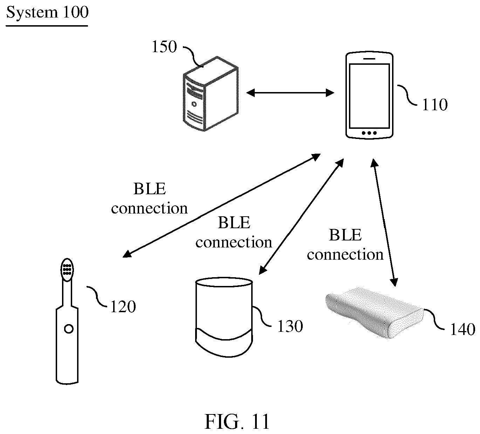

The data transmission method provided in embodiments of this application may be applied to a system shown in FIG. 11. As shown in FIG. 11, a system 100 may include a terminal 110 (for example, a first terminal and a second terminal), a plurality of home devices (for example, a first home device 120, a second home device 130, and a third home device 140), and a server 150.

The terminal may be a device like a mobile phone, a tablet computer, a laptop computer, a notebook computer, an ultra-mobile personal computer (Ultra-mobile Personal Computer, UMPC), a handheld computer, a netbook, a personal digital assistant (Personal Digital Assistant, PDA), and a wearable terminal. A specific form of the terminal is not specially limited in embodiments of this application. For example, as shown in FIG. 11, the terminal 110 may be the mobile phone.

The home devices may include a smart life device, an intelligent wearable device, a smart medical device, a smart vehicle-mounted device, and the like. Smart home devices may include a smart toothbrush, a smart cup, a smart pillow, and the like. Intelligent wearable devices may include a smartwatch, smart glasses, a smart band, and the like. Smart medical devices may include a smart thermometer, a smart blood pressure meter, and the like. Smart vehicle-mounted devices may include a vehicle-mounted camera, a vehicle-mounted stereo, and the like. Certainly, the home devices in embodiments of this application are not limited to the foregoing listed devices. For example, as shown in FIG. 11, the first home device 120 may be a smart toothbrush, the second home device 130 may be a smart cup, and the third home device 140 may be a smart pillow.

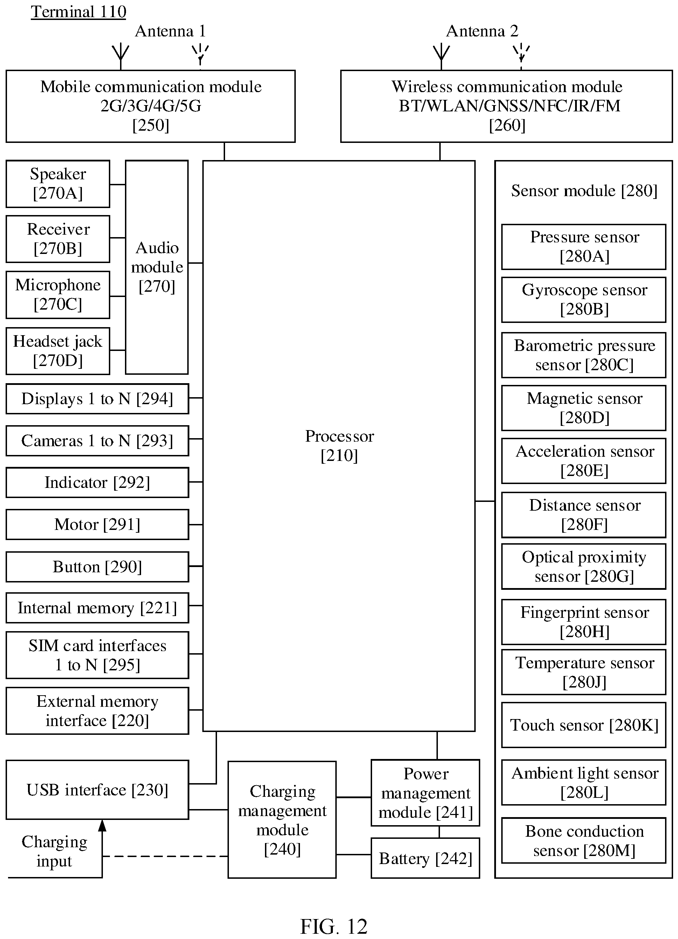

FIG. 12 is a block diagram of a structure of the foregoing terminal.

As shown in FIG. 12, the terminal 110 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identity module, SIM) card interface 295, and the like. The sensor module 280 may include a pressure sensor 280A, a gyro sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that the structure illustrated in embodiments of the present invention does not constitute a specific limitation on the terminal 110. In some other embodiments of this application, the terminal 110 may include more or fewer components than those shown in the figure, or some components may be combined, or some components may be split, or there may be a different component layout. The illustrated components may be implemented in hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction fetching and instruction execution.

A memory may be further disposed in the processor 210, and is configured to store instructions and data. In some embodiments, the memory in the processor 210 is a cache. The memory may store instructions or data that has been used or is cyclically used by the processor 210. If the processor 210 needs to use the instruction or the data again, the processor 210 may directly invoke the instruction or the data from the memory. This avoids repeated access, reduces waiting time of the processor 210, and improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in embodiments of the present invention is merely an example for description, and does not constitute a limitation on the structure of the terminal 110. In some other embodiments of this application, the terminal 110 may alternatively use an interface connection manner different from that in the foregoing embodiment, or a combination of a plurality of interface connection manners.

The charging management module 240 is configured to receive a charge input from a charger. The charger may be a wireless charger, or may be a wired charger. In some embodiments of wired charging, the charging management module 240 may receive a charging input from a wired charger through the USB interface 230. In some embodiments of wireless charging, the charging management module 240 may receive wireless charging input via a wireless charging coil of the terminal 110. The charging management module 240 may further supply power to the electronic device by using the power management module 241 while charging the battery 242.

The power management module 241 is configured to connect to the battery 242, the charging management module 240, and the processor 210. The power management module 241 receives input of the battery 242 and/or the charging management module 240, and supplies power to the processor 210, the internal memory 221, the display 294, the camera 293, the wireless communication module 260, and the like. The power management module 241 may be further configured to monitor parameters such as a battery capacity, a battery cycle count, and battery health (electric leakage and impedance). In some other embodiments, the power management module 241 may also be disposed in the processor 210. In some other embodiments, the power management module 241 and the charging management module 240 may alternatively be disposed in a same device.

A wireless communication function of the terminal 110 may be implemented through the antenna 1, the antenna 2, the mobile communication module 250, the wireless communication module 260, the modem processor, the baseband processor, and the like.

The antenna 1 and the antenna 2 are configured to transmit and receive electromagnetic wave signals. Each antenna in the terminal 110 may be configured to cover a single communication band or a plurality of communication bands. Different antennas may be further multiplexed to improve antenna utilization. For example, the antenna 1 may be multiplexed as a diversity antenna of a wireless local area network. In other embodiments, the antenna may be used in combination with a tuning switch.

The mobile communication module 250 may provide a solution, applied to the terminal 110, to wireless communication including 2G, 3G, 4G, 5G, and the like. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit the electromagnetic wave to the modem processor for demodulation. The mobile communication module 250 may further amplify a signal modulated by the modem processor, and convert the signal into an electromagnetic wave for radiation through the antenna 1. In some embodiments, at least some functional modules of the mobile communication module 250 may be disposed in the processor 210. In some embodiments, at least some functional modules of the mobile communication module 250 and at least some modules of the processor 210 may be disposed in one device.

The modem processor may include a modulator and a demodulator. The modulator is configured to modulate a to-be-sent low-frequency baseband signal into a medium-high frequency signal. The demodulator is configured to demodulate the received electromagnetic wave signal into the low-frequency baseband signal. Then, the demodulator transmits the demodulated low-frequency baseband signal to the baseband processor for processing. The low-frequency baseband signal is processed by the baseband processor and then transferred to the application processor. The application processor outputs a sound signal by using an audio device (which is not limited to the speaker 270A, the receiver 270B, and the like), or displays an image or a video on the display 294. In some embodiments, the modem processor may be an independent component. In some other embodiments, the modem processor may be independent of the processor 210, and the modem processor and the mobile communication module 250 or another functional module may be disposed in one device.

The wireless communication module 260 may provide a wireless communication solution that is applied to the terminal 110, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 260 may be one or more components integrating at least one communication processor module. The wireless communication module 260 receives an electromagnetic wave through the antenna 2, performs frequency modulation and filtering processing on an electromagnetic wave signal, and sends a processed signal to the processor 210. The wireless communication module 260 may further receive a to-be-sent signal from the processor 210, perform frequency modulation and amplification on the signal, and convert the signal into an electromagnetic wave for radiation through the antenna 2. In some embodiments, the wireless communication module 260 receives a broadcast sent by the first home device and data sent by the first home device.

In some embodiments, in the terminal 110, the antenna 1 is coupled to the mobile communication module 250, and the antenna 2 is coupled to the wireless communication module 260. Therefore, the terminal 110 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The terminal 110 implements a display function through the GPU, the display 294, the application processor, and the like. The GPU is a microprocessor for image processing, and is connected to the display 294 and the application processor. The GPU is configured to perform mathematical and geometric calculations, and render an image. The processor 210 may include one or more GPUs that execute program instructions to generate or change display information.

The display 294 is configured to display an image, a video, or the like, for example, a teaching video and a user action picture video in embodiments of this application. The display 294 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal 110 may include one or N displays 294, where N is a positive integer greater than 1.

The terminal 110 can implement a photographing function by using the ISP, the camera 293, the video codec, the GPU, the display 294, the application processor, and the like.

The ISP is configured to process data fed back by the camera 293. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 293.

The camera 293 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the terminal 110 may include one or N cameras 293, where N is a positive integer greater than 1.

The digital signal processor is configured to process a digital signal, and may process another digital signal in addition to the digital image signal. For example, when the terminal 110 selects a frequency, the digital signal processor is configured to perform a Fourier transform or the like on energy of the frequency.

The video codec is used to compress or decompress digital video. The terminal 110 may support one or more video codecs. In this way, the terminal 110 can play or record videos in a plurality of coding formats, for example, moving picture experts group (moving picture experts group, MPEG) 1, MPEG 2, MPEG 3, and MPEG 4.

The NPU is a neural-network (neural-network, NN) computing processor, quickly processes input information by referring to a structure of a biological neural network, for example, by referring to a transmission mode between human brain neurons, and may further continuously perform self-learning. Applications such as intelligent cognition of the terminal 110 may be implemented through the NPU, for example, image recognition, facial recognition, speech recognition, and text understanding.

The external memory interface 120 may be used to connect to an external memory card, for example, a micro SD card, to extend a storage capability of the terminal 110. The external storage card communicates with the processor 210 through the external memory interface 120, to implement a data storage function. For example, files such as music and videos are stored in the external storage card.

The internal memory 221 may be configured to store computer-executable program code, where the executable program code includes instructions. The internal memory 221 may include a program storage area and a data storage area. The program storage area may store an operating system, an application required by at least one function (for example, a voice playing function or an image playing function), and the like. The data storage area may store data (for example, audio data or a phone book) created in a process of using the terminal 110, and the like. In addition, the internal memory 221 may include a high-speed random access memory, and may further include a nonvolatile memory, for example, at least one magnetic disk storage device, a flash storage device, or a universal flash storage (universal flash storage, UFS). The processor 210 performs various function applications and data processing of the terminal 110 by running the instructions stored in the internal memory 221 and/or instructions stored in the memory disposed in the processor.

In some embodiments, the internal memory 221 may store an identifier of at least one BLE device. Alternatively, the internal memory 221 may store an identifier of at least one BLE device and an access credential of the at least one BLE device. Alternatively, the internal memory 221 may store an identifier of at least one BLE device in association with a user account. Alternatively, the internal memory 221 may store an identifier and an access credential of at least one BLE device in association with a user account.

The terminal 110 may implement an audio function like music playing or recording through the audio module 270, the speaker 270A, the receiver 270B, the microphone 270C, the headset jack 270D, the application processor, and the like.

The audio module 270 is configured to convert digital audio information into an analog audio signal for output, and is also configured to convert analog audio input into a digital audio signal. The audio module 270 may be further configured to encode and decode an audio signal. In some embodiments, the audio module 270 may be disposed in the processor 210, or some functional modules of the audio module 270 are disposed in the processor 210.

The speaker 270A, also referred to as a "loudspeaker", is configured to convert an audio electrical signal into a sound signal. The terminal 110 may be used to listen to music or answer a hands-free call through the speaker 270A.

The receiver 270B, also referred to as an "earpiece", is configured to convert an electrical audio signal into a sound signal. When a call is answered or an audio message is received through the terminal 110, the receiver 270B may be put close to a human ear to listen to voice.

The microphone 270C, also referred to as a "mike" or a "mic", is configured to convert a sound signal into an electrical signal. When making a call or sending speech information, a user may place the mouth of the user near the microphone 270C to make a sound, to input a sound signal to the microphone 270C. At least one microphone 270C may be disposed in the terminal 110. In some other embodiments, two microphones 270C may be disposed in the terminal 110, to collect a sound signal and further implement a noise reduction function. In some other embodiments, three, four, or more microphones 270C may alternatively be disposed in the terminal 110, to collect a sound signal, reduce noise, further identify a sound source, implement a directional recording function, and the like.

The headset jack 270D is configured to connect to a wired headset. The headset jack 270D may be the USB interface 230, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 280A is configured to sense a pressure signal, and can convert a pressure signal into an electrical signal. In some embodiments, the pressure sensor 280A may be disposed on the display 294. There are a plurality of types of pressure sensors 280A, such as a resistive pressure sensor, an inductive pressure sensor, and a capacitive pressure sensor. The capacitive pressure sensor may include at least two parallel plates made of conductive materials. When a force is applied to the pressure sensor 280A, capacitance between electrodes changes. The terminal 110 determines intensity of pressure based on the change of the capacitance. When a touch operation is performed on the display 294, the terminal 110 detects a strength of the touch operation based on the pressure sensor 280A. The terminal 110 may alternatively calculate a touch location based on a detection signal of the pressure sensor 280A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 280B may be configured to determine a motion posture of the terminal 110. In some embodiments, an angular velocity of the terminal 110 around three axes (namely, axes x, y, and z) may be determined through the gyroscope sensor 280B. The gyroscope sensor 280B may be configured to implement image stabilization during photographing. For example, when the shutter is pressed, the gyroscope sensor 280B detects an angle at which the terminal 110 jitters, calculates, based on the angle, a distance for which a lens module needs to compensate, and allows the lens to cancel the jitter of the terminal 110 through reverse motion, to implement image stabilization. The gyroscope sensor 280B may be further used in a navigation scenario and a motion-sensing gaming scenario.

The barometric pressure sensor 280C is configured to measure barometric pressure. In some embodiments, the terminal 110 calculates an altitude through a barometric pressure value measured by the barometric pressure sensor 280C, to assist positioning and navigation.

The magnetic sensor 280D includes a Hall sensor. The terminal 110 may detect opening and closing of a flip leather case through the magnetic sensor 280D. In some embodiments, when the terminal 110 is a clamshell phone, the terminal 110 may detect opening and closing of a flip cover through the magnetic sensor 280D. Further, a feature such as automatic unlocking of the flip cover is set based on a detected opening or closing state of the leather case or a detected opening or closing state of the flip cover.

The acceleration sensor 280E may detect acceleration values in various directions (usually on three axes) of the terminal 110. A magnitude and direction of gravity can be detected when the terminal 110 is stationary. The acceleration sensor 280E may be further configured to identify a posture of the electronic device, and is used in an application such as switching between a landscape mode and a portrait mode or a pedometer.

The distance sensor 280F is configured to measure a distance. The terminal 110 may measure a distance by using infrared light or a laser. In some embodiments, in a shooting scenario, the terminal 110 may use the distance sensor 280F to measure a distance, to implement quick focusing.

The optical proximity sensor 280G may include, for example, a light-emitting diode (LED) and an optical detector, such as a photodiode. The light emitting diode may be an infrared light emitting diode. The terminal 110 emits infrared light by using the light-emitting diode. The terminal 110 detects infrared reflected light from a nearby object by using the photodiode. When sufficient reflected light is detected, the terminal 110 may determine that there is an object near the terminal 110. When insufficient reflected light is detected, the terminal 110 may determine that there is no object near the terminal 110. The terminal 110 may detect, through the optical proximity sensor 280G, that the user holds the terminal 110 close to an ear to make a call, to automatically turn off a screen for power saving. The optical proximity sensor 280G may also be used in a flip cover mode or a pocket mode to automatically unlock or lock the screen.

The ambient light sensor 280L is configured to sense ambient light brightness. The terminal 110 may adaptively adjust brightness of the display 294 based on the sensed ambient light brightness. The ambient light sensor 280L may also be configured to automatically adjust a white balance during photographing. The ambient light sensor 280L may further cooperate with the optical proximity sensor 280G to detect whether the terminal 110 is in a pocket, to prevent an accidental touch.

The fingerprint sensor 280H is configured to collect a fingerprint. The terminal 110 may use a feature of the collected fingerprint to implement fingerprint-based unlocking, application lock access, fingerprint-based photographing, fingerprint-based call answering, and the like.

The temperature sensor 280J is configured to detect a temperature. In some embodiments, the terminal 110 executes a temperature processing policy based on the temperature detected by the temperature sensor 280J. For example, when the temperature reported by the temperature sensor 280J exceeds a threshold, the terminal 110 lowers performance of a processor located near the temperature sensor 280J, to reduce power consumption to implement thermal protection. In some other embodiments, when the temperature is lower than another threshold, the terminal 110 heats the battery 242 to prevent the terminal 110 from being shut down abnormally because of a low temperature. In some other embodiments, when the temperature is lower than still another threshold, the terminal 110 boosts an output voltage of the battery 242 to avoid abnormal shutdown caused by a low temperature.

The touch sensor 280K is also referred to as a "touch control device". The touch sensor 280K may be disposed on the display 294, and the touch sensor 280K and the display 294 form a touchscreen. The touch sensor 280K is configured to detect a touch operation performed on or near the touch sensor. The touch sensor may transfer the detected touch operation to the application processor to determine a type of the touch event. A visual output related to the touch operation may be provided through the display 294. In some other embodiments, the touch sensor 280K may alternatively be disposed on a surface of the terminal 110, which is different from a location of the display 294.

The bone conduction sensor 280M may obtain a vibration signal. In some embodiments, the bone conduction sensor 280M may obtain a vibration signal of a vibration bone of human vocal cords. The bone conduction sensor 280M may also be in contact with a human pulse, and receive a pulse beating signal indicating a blood pressure. In some embodiments, the bone conduction sensor 280M may alternatively be disposed in the headset, to constitute a bone conduction headset. The audio module 270 may obtain a voice signal through parsing based on the vibration signal that is of the vibration bone of the vocal part and that is obtained by the bone conduction sensor 280M, to implement a voice function. The application processor may parse heart rate information based on the blood pressure beating signal obtained by the bone conduction sensor 280M, to implement a heart rate detection function.

The button 290 includes a power button, a volume button, and the like. The button 290 may be a mechanical button. It can also be a touch button. The terminal 110 may receive a button input, and generate a button signal input related to user setting and function control of the terminal 110.

The motor 291 may generate a vibration prompt. The motor 291 may be configured to produce an incoming call vibration prompt and touch vibration feedback. For example, touch operations performed on different applications (such as photographing and audio playing) may correspond to different vibration feedback effects. For touch operations performed on different areas of the display 294, the motor 291 may also correspond to different vibration feedback effects. Different application scenarios (for example, a time reminder, information receiving, an alarm clock, a game) may also correspond to different vibration feedback effects. The touch vibration feedback effect can also be customized.

The indicator 292 may be an indicator light, and may be configured to indicate a charging status and a power change, or may be configured to indicate a message, a missed call, a notification, and the like.

Certainly, the terminal 110 may further include another functional unit. This is not limited in this embodiment of this application.

In addition, actions, terms, and the like in embodiments of this application may be mutually referenced. This is not limited. In embodiments of this application, names of messages exchanged between devices, names of parameters in the messages, or the like are merely examples. During specific implementation, other names may alternatively be used. This is not limited.

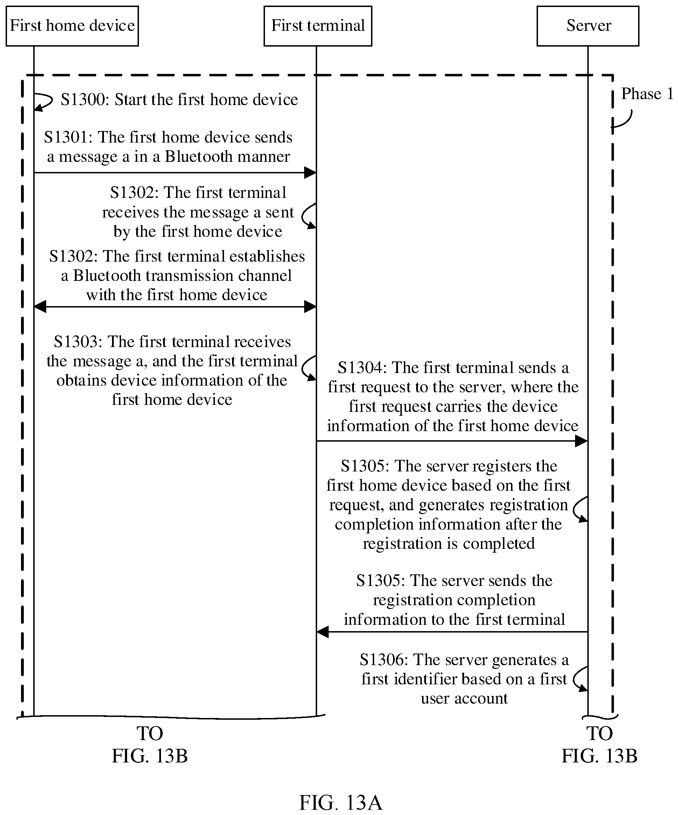

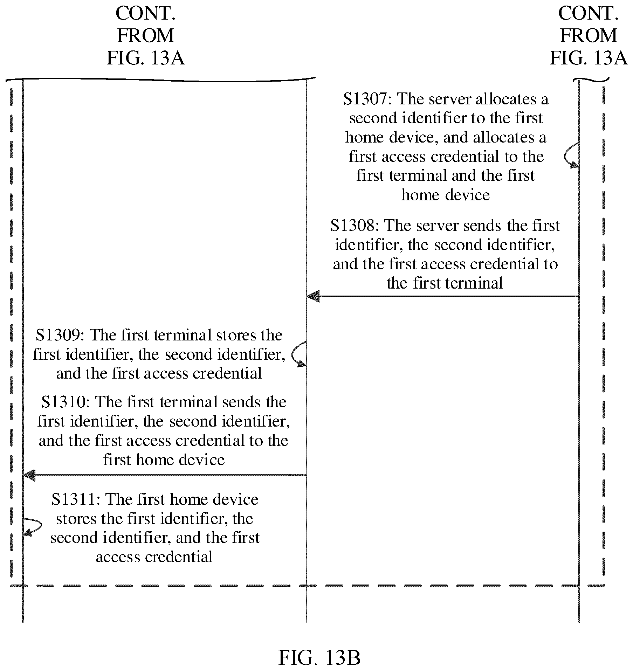

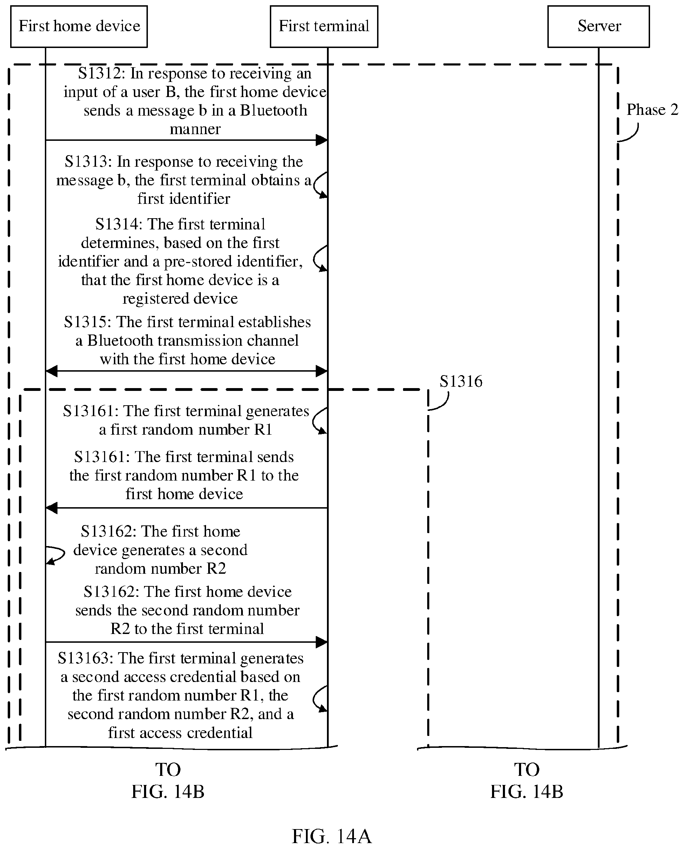

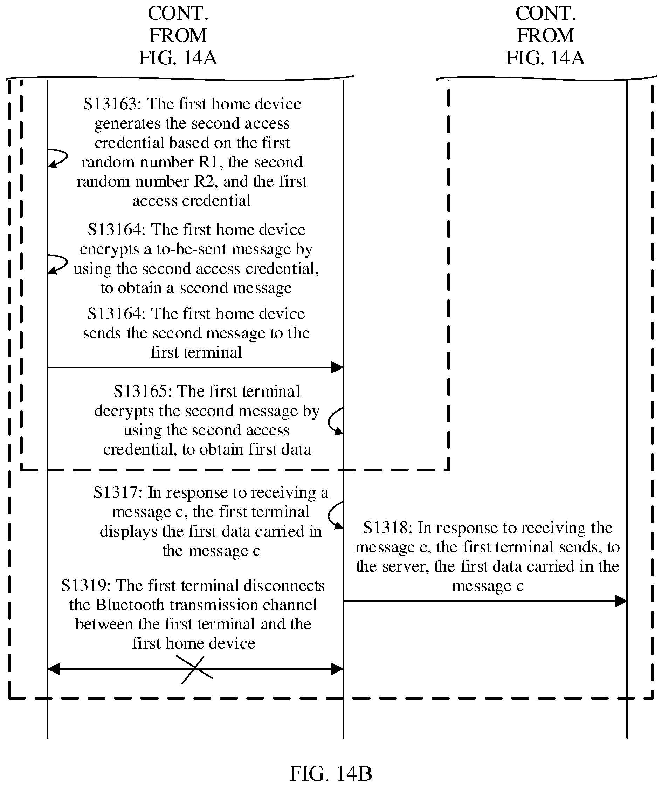

FIG. 13A and FIG. 13B are a schematic flowchart of a data transmission method according to an embodiment of this application. FIG. 14A and FIG. 14B are a schematic flowchart of a data transmission method according to an embodiment of this application. As shown in FIG. 13A and FIG. 13B and FIG. 14A and FIG. 14B, the method is applied to a communication system. The communication system may include a first home device, a first terminal, and a server. The first home device may include a Bluetooth low energy module or has a Bluetooth low energy communication function. The method may be described in the following phases, which are specifically as follows.

### Phase 1: Registration phase

S1300: Start the first home device in response to receiving a user A (for example, the foregoing third user) input.

The first home device may be a BLE device. BLE devices may include a smart toothbrush, a smart cup, a smart pillow, and the like. This is not specifically limited in embodiments of this application.

The user A input may include a configuration operation performed by a user A on the first home device, for example, a registration operation of using the first home device for the first time, a network connection operation of the first home device, a connection operation of the first home device and another terminal. This is not specifically limited in embodiments of this application.

For example, a user may operate a button on the first home device to start the first home device. For example, the user may press the button on the first home device to start the first home device.

S1301: The first home device sends a message a (for example, the foregoing fifth message) in a Bluetooth manner, where the message a carries device information of the first home device.

The message a may be a Bluetooth broadcast. Certainly, the message a in this embodiment of this application is not limited to the Bluetooth broadcast. In this embodiment of this application, an example in which the message is a Bluetooth broadcast is used for description.

The device information of the first home device may include a device type and/or an identifier of the first home device, and the identifier may be used to uniquely identify the first home device. Alternatively, the identifier is used by a server or a first terminal to identify an identity of the first home device. The identifier may be a serial number (serial number, SN), a physical address, a unique device identifier (unique device identifier, UDID), or the like. Certainly, the identifier may alternatively be a character string, an array, or the like used for external presentation.

A trigger condition for the first home device to send the message a may be selected based on types of home devices. For example, the first home device is a smart toothbrush, and correspondingly, the trigger condition may be operating a power button; the first home device is a smart cup, and correspondingly, the trigger condition may be opening a cup cover; and the first home device is a smart pillow, and correspondingly, the trigger condition may be pressing the pillow. Certainly, this embodiment of this application is not limited to the foregoing examples.

That the first terminal receives the message a sent by the first home device may be implemented in the following manner. An example in which the message a is a first Bluetooth broadcast is used.

In a specific implementation, when a distance between the first terminal and the first home device is less than or equal to a first specified distance, and there is no obstacle between the first terminal and the first home device, the first terminal receives the first Bluetooth broadcast sent by the first home device. The first specified distance may include 10 m, 9 m, 11 m, and the like.

In this embodiment of this application, a position of the home device is not fixed, so that a user can carry a movable first terminal and move to the home device within one hop (for example, within 10 m), to automatically complete data transmission of the home device to the server. A coverage range of the device is wide.

S 1302: The first terminal receives the message a sent by the first home device, and establishes a Bluetooth transmission channel with the first home device.

The first terminal enables a Bluetooth function. The user may operate a setting application of the first terminal, and operate a Bluetooth option on an interface of the setting application. The first terminal displays a Bluetooth interface in response to a user operation. The identifier of the first home device may be displayed on the Bluetooth interface. Certainly, the identifier of the first home device may alternatively not be displayed on the Bluetooth interface, and the user may operate a "Scan" control on the Bluetooth interface. The first terminal scans the first Bluetooth broadcast in response to the user operation. When the first terminal detects, through scanning, the first Bluetooth broadcast sent by the first home device, the first terminal may find the first home device, and display the identifier of the first home device on the Bluetooth interface. The user operates the identifier of the first home device, and in response to the user operation, the first terminal establishes the Bluetooth transmission channel with the first home device.

In some embodiments, to ensure information transmission security, the first terminal and the first home device obtain an encryption key of a Bluetooth protocol through negotiation, and therefore an encrypted Bluetooth transmission channel is established between the first terminal and the first home device. The encrypted Bluetooth transmission channel may be used when the first terminal performs information transmission with the first home device.

S1303: The first terminal receives the message a, and the first terminal obtains the device information of the first home device.

In a specific implementation, the first terminal receives the message a through the encrypted Bluetooth transmission channel. In this way, the information transmission security between the first terminal and the first home device is ensured.

S1304: The first terminal sends a first request to the server, where the first request is used to request to bind the first home device to a first user account (namely, a first account). The first request carries the device information of the first home device. Correspondingly, the server receives the first request.

In other words, the first terminal may replace the first home device to request to register the first user account from the server. The first user account may be a user account used by the first terminal to log in. For example, the first user account may be a Huawei account.

S1305: The server registers with the first home device based on the first request, generates registration completion information after the registration is completed, and sends the registration completion information to the first terminal. Correspondingly, the first terminal receives the registration completion information sent by the server.

The server performs registration by using the device information of the first home device. In other words, the server binds the device information of the first home device to the first user account.

For example, the server binds the first user account to information such as a device type, a serial number, and a physical address (namely, a MAC address) of the first home device.

It should be noted that, using a Huawei account as an example, when the first terminal is used for the first time, the first terminal requests the server to register a Huawei account. The server binds the first terminal to the Huawei account based on the request of the first terminal, that is, completes registration of the first terminal. After the first terminal registers the Huawei account, the first terminal may log in to the server by using the Huawei account. Subsequently, when the first terminal is used not for the first time, the first terminal may directly use the Huawei account to log in to the server.

S 1306: After the server successfully registers with the first home device, the server generates a first identifier based on the first user account, where the first identifier identifies a device bound to the first user account.

The first user account is in a one-to-one correspondence with the first terminal, and is in a one-to-one correspondence with the first home device.

In a specific implementation, the first terminal may perform hash processing on the first user account to obtain the first identifier. Certainly, this embodiment of this application is not limited to hash processing, and another algorithm, for example, an identification algorithm, may be used. This is not specifically limited in embodiments of this application. Further, the first identifier may be a hash value of the first user account.

For example, the first identifier may be a BLE broadcast filtering ID.

S 1307: After the server successfully registers with the first home device, the server allocates a second identifier to the first home device, and allocates a first access credential to the first terminal and the first home device.

It should be understood that, after the server successfully registers with the first home device, the server may generate the second identifier based on the first identifier, the physical address, and the first user account of the first home device. The server may allocate the second identifier to the first home device. The second identifier is used to uniquely identify a registered device, so that the first terminal and the server can identify the registered device. For example, the second identifier may be a device ID.

In addition, after the server successfully registers with the first home device, the server may allocate the first access credential to the first terminal and a first BLR device, where the first access credential is used for mutual authentication between the first terminal and the first home device. For example, the first access credential may be a key authcode.

In some embodiments, each time after the first terminal establishes the Bluetooth transmission channel with the first home device, the first terminal and the first home device may obtain a temporary session key of the Bluetooth protocol through negotiation based on the first access credential, and may encrypt communication content by using the temporary session key. In this way, security of the communication content between the first terminal and the first home device is effectively ensured.

In some other embodiments, to make communication between the first terminal and the first home device more secure, dual-layer encryption may be performed. Specifically, the first terminal and the first home device obtain the encryption key of the Bluetooth protocol through negotiation, and therefore the encrypted Bluetooth transmission channel is established between the first terminal and the first home device. The encrypted Bluetooth transmission channel may be used when the first terminal performs information transmission with the first home device. In addition, the first terminal and the first home device may obtain the temporary session key of the Bluetooth protocol through negotiation based on the first access credential, and may encrypt communication content by using the temporary session key. In this way, dual-layer encryption may be used to make communication between the first terminal and the first home device more secure.

S1308: The server sends the first identifier, the second identifier, and the first access credential to the first terminal. Correspondingly, the first terminal receives the first identifier, the second identifier, and the first access credential.

S1309: The first terminal stores the first identifier, the second identifier, and the first access credential.

S1310: The first terminal sends the first identifier, the second identifier, and the first access credential to the first home device. Correspondingly, the first home device receives the first identifier, the second identifier, and the first access credential.

S1311: The first home device stores the first identifier, the second identifier, and the first access credential.

Specifically, the first home device receives the device ID, the key authcode, and the BLE broadcast filtering ID, and stores them in local flash (flash).

### Phase 2: Data transmission phase

S1312: In response to receiving an input of a user B (for example, the foregoing first user), the first home device sends a message b (for example, the foregoing first message) in a Bluetooth manner. Correspondingly, the first terminal receives the message b.

The message b may alternatively be a Bluetooth broadcast. Certainly, the message b in this embodiment of this application is not limited to the Bluetooth broadcast.

The message b may include a first identifier (for example, the first identifier generated in the phase 1), the first identifier is pre-stored in the first terminal and the first home device, the first identifier is generated based on the first account, and the first account corresponds to the first terminal and the first home device.

The input of the user B may include any one of a start operation performed by the user B on the first home device, a turn-off operation performed by the user B on the first home device, a press operation performed by the user B on the first home device, and a touch operation performed by the user B on the first home device. In this embodiment of this application, for different home devices, the user B also has different inputs.

For example, the first home device is a smart toothbrush. A user may operate a start button of the smart toothbrush to start the smart toothbrush. For example, the user may tap a power button of the smart toothbrush to start the smart toothbrush; or the user may press a power button of the smart toothbrush for preset time, where the preset time may be 3 seconds, 5 seconds, or the like.

For example, the first home device is a smart cup. The user may open a cup cover of the smart cup to start the smart cup. For example, the user may start the smart cup by rotating the cup cover of the smart cup; or the user may start the smart cup by tapping a cover opening button on the smart cup.

In this step, that the first home device sends a message b in a Bluetooth manner may be specifically implemented as follows: That the message b is a second Bluetooth broadcast is used as an example.

In some implementations, when sending the second Bluetooth broadcast, a Bluetooth module of the first home device performs Bluetooth broadcast at a preset transmit frequency. For example, the Bluetooth module sends the second Bluetooth broadcast for one time at intervals of preset time T, and duration for sending the second Bluetooth broadcast is X seconds. In the X seconds, Bluetooth broadcast information is continuously sent. Correspondingly, when performing signal scanning, a Bluetooth module of the first terminal performs scanning at a preset scanning frequency. It is preset that the first terminal performs scanning for one time every y seconds, and duration of each scanning is z seconds. As long as the first home device initiates a broadcast, the first terminal may receive the broadcast. For example, the first terminal may perform scanning for one time every 600 ms, and duration of each scanning is 100 ms.

In some other implementations, when the Bluetooth module of the first home device sends the second Bluetooth broadcast, the Bluetooth module of the first terminal does not receive the second Bluetooth broadcast within first preset time, that is, the first terminal does not establish a Bluetooth connection to the first home device. In this case, the Bluetooth module of the first home device stops broadcasting. For example, the first preset time may be 5 minutes or 10 minutes. Further, the first home device attempts to send the broadcast again after the user uses the first home device to generate data next time.

In some other implementations, when the Bluetooth module of the first home device sends the second Bluetooth broadcast, a distance between the first terminal and the first home device exceeds a preset distance. In this case, the Bluetooth module of the first terminal does not receive the second Bluetooth broadcast, that is, the first terminal does not establish a Bluetooth connection to the first home device. Within second preset time, the first terminal or the first home device moves, so that the distance between the first terminal and the first home device is less than or equal to the preset distance. In this case, the Bluetooth module of the first terminal receives the second Bluetooth broadcast, that is, the first terminal establishes a Bluetooth connection to the first home device.

Certainly, if the distance between the first terminal and the first home device is still greater than the preset distance within the second preset time, the Bluetooth module of the first terminal does not receive the second Bluetooth broadcast, that is, the first terminal does not establish a Bluetooth connection to the first home device. In this case, the first home device may attempt to send the broadcast again after the user uses the first home device to generate data next time.

In some embodiments, the first home device may include an identity recognition unit, and the identity recognition unit is configured to obtain a personal biometric feature of a user. The personal biometric feature may include a fingerprint, a face, a sound, and the like. Certainly, the personal biometric feature may alternatively be another feature, for example, an ear print. This is not specifically limited in embodiments of this application. S1312 may be specifically implemented as follows: In response to an operation performed by the first user on the identity recognition unit, the first home device determines, based on a personal biometric feature of the first user obtained by the identity recognition unit, that the first user corresponds to the first account. The first home device sends the first message in the Bluetooth manner.

S1313 : In response to receiving the message b, the first terminal obtains the first identifier.

S1314: The first terminal determines, based on the first identifier and a pre-stored identifier, that the first home device is a registered device.

In the phase 1, the first terminal pre-stores the first identifier.

Specifically, after the first terminal receives the second Bluetooth broadcast sent by the first home device, the first terminal parses out the first identifier carried in the second Bluetooth broadcast. The first terminal compares the first identifier with the pre-stored identifier. The first terminal determines that the first identifier matches the pre-stored identifier, and the first terminal may determine that the first home device is the registered device.

S1315: The first terminal automatically establishes a Bluetooth transmission channel with the first home device.

After the first terminal may perform matching with the pre-stored identifier based on the first identifier, and the matching succeeds, the first terminal determines that the first home device is a device that can be connected. Therefore, the first terminal establishes the Bluetooth transmission channel with the first home device.

S1316: The first home device sends a message c (for example, the foregoing second message) to the first terminal through the Bluetooth transmission channel, where the second message includes first data. Correspondingly, the first terminal receives the message c sent by the first home device.

The first data may include usage record data of the first home device in first historical duration and the first identifier, and the first data is used to feed back usage record data of the first account in the first historical duration.

The first historical duration may be understood as a period of time before an end moment at which the user recently uses the first home device, for example, a day, a quarter, or an hour. The first historical duration needs to be set based on an actual requirement in embodiments of this application.

For example, the first home device may be the smart toothbrush, and the first data may be a toothbrush score generated after the user brushes teeth by using the smart toothbrush and the tooth brushing ends. The first home device may be the smart cup, and the first data may be a water intake amount and water intake time that are generated after the user drinks water by using the smart cup. The first home device may be a smart pillow, and the first data may be sleep quality data generated after the user gets up. These are not enumerated one by one in embodiments of this application.

In a specific implementation, S1316 may be specifically implemented as: S13161: The first terminal generates a first random number R1, and sends the first random number R1 to the first home device. S13162: The first home device generates a second random number R2, and sends the second random number R2 to the first terminal. S13163: The first terminal generates a second access credential based on the first random number R1, the second random number R2, and the first access credential. At the same time, the first home device generates the second access credential based on the first random number R1, the second random number R2, and the first access credential. S13164: The first home device encrypts a to-be-sent message by using the second access credential, to obtain the second message, and sends the second message to the first terminal. S13165: The first terminal receives the second message, and decrypts the second message by using the second access credential, to obtain the first data. In this embodiment of this application, transmitted data is encrypted, so that communication between the first terminal and the first home device is more secure.

S1317: In response to receiving the message c, the first terminal displays the first data carried in the message c.

For example, the first terminal displays an interface shown in FIG. 9 or FIG. 10.

S1318: In response to receiving the message c, the first terminal sends, to the server, the first data carried in the message c.

That the first terminal reports the first data to the server may be specifically implemented in the following manner.

In a specific implementation, the first terminal may report the first data to the server in real time. In other words, when receiving the first data sent by the first home device, the first terminal reports the first data to the server.

In another specific implementation, the first terminal may report the first data to the server at a preset time interval. For example, the first terminal may report data in one hour to the server in batches; or the first terminal may report data in one day to the server in batches.

In another specific implementation, the first terminal may report the data to the server when the user triggers to view the data. Specifically, the first terminal receives an operation performed by the user on the first terminal. In response to the user operation, the first terminal reports the first data to the server.

For example, the user performs an operation on a smart toothbrush card on the interface shown in FIG. 8, and the first terminal receives the user operation. In response to the operation, the first terminal displays data of the smart toothbrush. In this case, the first terminal displays an interface 118 shown in FIG. 9, and information such as tooth brushing duration, a tooth brushing mode, a tooth brushing start, a tooth brushing strength, and a tooth brushing score is displayed on the interface 118. As shown in FIG. 9, the tooth brushing duration is 3 minutes and 10 seconds, the tooth brushing mode is cleaning, the tooth brushing strength is strong, a tooth brushing start position is an upper left area, and the tooth brushing score is 100. In addition, the first terminal reports the data of the smart toothbrush to the server.

For example, the user performs an operation on a smart cup card on the interface shown in FIG. 8, and the first terminal receives the user operation. In response to the operation, the first terminal displays data of the smart cup. In this case, the first terminal displays an interface 119 shown in FIG. 10, and information such as a daily water intake amount, an average water intake amount in a week, and a water intake target of the user is displayed on the interface 119. In addition, the first terminal reports the data of the smart cup to the server.

For example, the user performs an operation on a smart pillow card on the interface shown in FIG. 8, and the first terminal receives the user operation. In response to the operation, the first terminal displays data of the smart pillow. The data of the smart pillow may include information such as sleep time, sleep duration, and a sleep habit. In this case, the first terminal displays an interface of the pillow, and information such as a sleep score, a sleep problem analysis, and an improvement suggestion is displayed on the interface. In addition, the first terminal reports the data of the smart pillow to the server.

In some embodiments, to reduce power consumption, after the first terminal reports the first data to the server, the method may further include: S1319: The first terminal disconnects the Bluetooth transmission channel between the first terminal and the first home device. In this way, when the first home device needs to upload data, the first terminal establishes the Bluetooth connection to the first home device according to the foregoing steps. Details are not described in this embodiment of this application.

In some embodiments, when a plurality of persons share one home device, the home device may transmit data to different terminals based on different users. Specifically, the communication system may further include a second terminal. The data transmission method provided in embodiments of this application may further include: in response to receiving a second user input, the first home device sends a third message in a Bluetooth manner, where the third message includes the second identifier, the second identifier is pre-stored in the second terminal and the first home device. The second identifier is generated based on a second user account. The second user account corresponds to the second terminal and the first home device. In response to receiving the third message, the terminal obtains the second identifier, and establishes a Bluetooth transmission channel with the first home device. The first home device sends a fourth message to the second terminal through the Bluetooth transmission channel, where the fourth message includes second data, the second data includes usage record data of the first home device in second historical duration and the second identifier, and the second data is used to feed back usage record data of the second user account in the second historical duration. In response to receiving the fourth message, the second terminal sends the second data to the server. For specific implementations of the steps in this embodiment of this application, refer to related content in the foregoing instance. Details are not described herein again.

In this way, the first home device can identify different users. For different users, the first home device may transmit data used by the users to terminals of the users, and then terminals of the users transmit the data to the server, so that data transmission tasks may be shared on each terminal, and this effectively avoids a loss on a single terminal.

An embodiment of this application provides a communication system. The communication system may include a first home device, a first terminal, and a server, and the first home device includes a Bluetooth low energy module or has a Bluetooth low energy communication function. In response to receiving a first user input, the first home device sends a first message in a Bluetooth manner, where the first message includes a first identifier, the first identifier is pre-stored in the first terminal and the first home device, the first identifier is generated based on a first account, and the first account corresponds to the first terminal and the first home device. In response to receiving the first message, the first terminal obtains the first identifier, and establishes a Bluetooth transmission channel with the first home device; the first home device sends a second message to the first terminal through the Bluetooth transmission channel, where the second message includes first data, the first data includes usage record data of the first home device in first historical duration and the first identifier, and the first data is used to feed back usage record data of the first account in the first historical duration. In response to receiving the second message, the first terminal sends the first data to the server.

In some embodiments, the communication system may further include a second terminal, and the method may further include: In response to receiving a second user input, the first home device sends a third message in the Bluetooth manner, where the third message includes a second identifier, the second identifier is pre-stored in the second terminal and the first home device, the second identifier is generated based on a second user account, and the second user account corresponds to the second terminal and the first home device. In response to receiving the third message, the terminal obtains the second identifier, and establishes a Bluetooth transmission channel with the first home device. The first home device sends a fourth message to the second terminal through the Bluetooth transmission channel, where the fourth message includes second data, the second data includes usage record data of the first home device in second historical duration and the second identifier, and the second data is used to feed back usage record data of the second user account in the second historical duration. In response to receiving the fourth message, the second terminal sends the second data to the server.

Further, the first account is in a one-to-one correspondence with the first terminal, and is in a one-to-one correspondence with the first home device.

Further, that the first home device sends a first message in a Bluetooth manner in response to receiving the first user input includes: The first home device sends the first message in a Bluetooth low energy manner in response to receiving the first user input.

Further, the first user input includes any one of a start operation performed by the first user on the first home device, a turn-off operation performed by the first user on the first home device, a press operation performed by the first user on the first home device, and a touch operation performed by the first user on the first home device.

Further, the first home device includes an identity recognition unit, where the identity recognition unit is configured to obtain a personal biometric feature of the user; and in response to receiving the first user input, that the first home device sends a first message in a Bluetooth manner includes: in response to an operation of the first user on the identity recognition unit, the first home device determines, based on the personal biometric feature of the first user obtained by the identity recognition unit, that the first user corresponds to the first account; and the first home device sends the first message in a Bluetooth manner.

Further, the first home device may include a smart toothbrush, a smart cup, and a smart pillow.

Further, the first home device includes the smart toothbrush, and the first data includes: one or more of tooth brushing duration, a tooth brushing mode, a tooth brushing start, a tooth brushing strength, and a tooth brushing score.

Further, that the first home device sends a first message in a Bluetooth manner in response to receiving the first user input includes: The smart toothbrush sends the first message in a Bluetooth manner in response to receiving an operation performed by the first user on a start button of the smart toothbrush.

Further, the first home device includes a smart cup, and the first data includes one or more of a daily water intake amount, an average water intake amount in a week, and a water intake target of the user.

Further, that the first home device sends a first message in a Bluetooth manner in response to receiving the first user input includes: The smart cup sends the first message in a Bluetooth manner in response to receiving an operation of opening a cup cover of the smart cup by the first user.

Further, the first home device includes a smart pillow, and the first data includes one or more of sleep time, sleep duration, a sleep habit, a sleep score, a sleep problem analysis, and a sleep improvement suggestion.

Further, that the first home device sends a first message in a Bluetooth manner in response to receiving the first user input includes: The smart pillow sends the first message in the Bluetooth manner in response to receiving a press operation performed by a head of the first user on the smart pillow.

Further, before the first home device sends the first message in the Bluetooth manner in response to receiving the first user input, the method further includes: The first home device sends a fifth message in the Bluetooth manner in response to receiving a third user input, where the fifth message includes device information of the first home device. In response to receiving the fifth message, the first terminal obtains the device information of the first home device. The first terminal sends a first request to the server, where the first request is used to request the server to register with the first home device by using the device information of the first home device, and the first request carries the device information of the first home device. The server registers with the first home device based on the first request, generates registration complete information after the registration is completed, and sends the registration complete information to the first terminal; and the first terminal receives the registration complete information sent by the server.

Further, the device information of the first home device includes one or more of a device type, a physical address, and a serial number.

Further, after the server registers with the first home device based on the first request, the method further includes: The server generates a first identifier based on the first account; separately sends the first identifier to the first terminal; the first terminal receives the first identifier and stores the first identifier; the first terminal sends the first identifier to the first home device; and the first home device receives and stores the first identifier.

Further, after the server registers with the first home device based on the first request, the method further includes: The server allocates a first access credential to the first terminal and the first home device; the server sends the first access credential to the first terminal; and the first terminal receives the first access credential, and sends the first access credential to the first home device.

Further, before the first home device sends a second message to the first terminal through a Bluetooth transmission channel, the method further includes: The first home device encrypts a to-be-sent message by using the first access credential, to obtain the second message; and before the first terminal sends first data to the server in response to receiving the second message, the method further includes: The first terminal receives, through the Bluetooth transmission channel, the second message sent by the first home device; and the first terminal decrypts the second message by using the first access credential, to obtain the first data.

Further, in response to receiving the first message, that the first terminal obtains the first identifier and establishes the Bluetooth transmission channel with the first home device includes: The first terminal establishes the Bluetooth transmission channel with the first home device based on the first identifier and a first condition that the first terminal and the first home device meet.

Further, the first condition may include that a distance between the first terminal and the first home device is less than or equal to a first preset distance; or a distance between the first terminal and the first home device is less than or equal to a first preset distance, and there is no obstacle between the first terminal and the first home device.

Further, after the first terminal sends first data to the server in response to receiving the second message, the method further includes: The first terminal disconnects the Bluetooth transmission channel from the first home device.

For a specific implementation of this embodiment of this application, refer to the foregoing related content. Details are not described again in this embodiment of this application.

In this embodiment of this application, in response to the first user input, the first home device starts to work, and the first home device sends the first message in a Bluetooth manner. The first terminal obtains the first identifier carried in the first message, and automatically establishes the Bluetooth transmission channel with the first home device. The first home device sends the usage record data of the first home device in the first historical duration to the first terminal through the Bluetooth transmission channel. The first terminal sends the usage record data to the server. It can be learned that in the entire data transmission process, the user only needs to start the first home device to work. In the process of the first home device to work (that is, when the user uses the first home device), the first home device automatically establishes the Bluetooth transmission channel with the first terminal, and the first home device automatically transmits the first data to the first terminal. In the whole process, the user does not need to specifically perform complex operations to upload the data to the server, and the operation is simplified. The home device can automatically transmit data to the server without user awareness.

In addition, in this embodiment of this application, the first home device does not need to transmit data to the server by using a Bluetooth low energy gateway (BLE gateway), and the BLE gateway does not need to be additionally purchased. In this way, a series of problems existing in using the BLE gateway are avoided, for example, the BLE gateway still consumes energy when no data is transmitted, it is inconvenient for the BLE gateway to move when the BLE gateway is powered in a power plug manner, and a BLE device moving in a home environment cannot keep a constant connection to the BLE gateway. Therefore, the solution provided in this embodiment of this application is more practical.

The solutions in the foregoing embodiments of this application may be combined on a premise that the solutions are not contradictory.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product is run on a computer, the computer is enabled to perform any one of the foregoing methods.

An embodiment of this application further provides a chip. The chip includes a processor and an interface circuit. The interface circuit is coupled to the processor. The processor is configured to run a computer program or instructions, to implement the foregoing methods. The interface circuit is configured to communicate with another module outside the chip.

All or some of any features or steps in embodiments of this application may be freely combined. The combined technical solutions also fall within the scope of this application.

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. "At least one" means one or more, and "a plurality of" means two or more. Terms such as "first" and "second" do not limit a quantity and an execution sequence, and the terms such as "first" and "second" do not indicate a definite difference.

In descriptions of this application, words such as "example" or "for example" are used to give an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

The foregoing descriptions about implementations allow a person skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of a software functional unit and sold or used as an independent product, the integrated unit may be stored in a readable storage medium. Based on such an understanding, the technical solutions of this application essentially, or the part contributing to the current technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data transmission method, applied to a communication system, wherein the communication system comprises a first home device, a first terminal, and a server, the first home device comprises a Bluetooth low energy module or has a Bluetooth low energy communication function, and the method comprises:
sending, by the first home device, a first message in a Bluetooth manner in response to receiving a first user input, wherein the first message comprises a first identifier, the first identifier is pre-stored in the first terminal and the first home device, the first identifier is generated based on a first account, and the first account corresponds to the first terminal and the first home device;
in response to receiving the first message, obtaining, by the first terminal, the first identifier, and establishing a Bluetooth transmission channel with the first home device;
sending, by the first home device, a second message to the first terminal through the Bluetooth transmission channel, wherein the second message comprises first data, the first data comprises usage record data of the first home device in first historical duration and the first identifier, and the first data is used to feed back usage record data of the first account in the first historical duration; and
in response to receiving the second message, sending, by the first terminal, the first data to the server.

2. The method according to claim 1, wherein the communication system further comprises a second terminal, and the method further comprises:
in response to receiving a second user input, sending, by the first home device, a third message in the Bluetooth manner, wherein the third message comprises a second identifier, the second identifier is pre-stored in the second terminal and the first home device, the second identifier is generated based on a second user account, and the second user account corresponds to the second terminal and the first home device;
in response to receiving the third message, obtaining, by the terminal, the second identifier, and establishing a Bluetooth transmission channel with the first home device;
sending, by the first home device, a fourth message to the second terminal through the Bluetooth transmission channel, wherein the fourth message comprises second data, the second data comprises usage record data of the first home device in second historical duration and the second identifier, and the second data is used to feed back usage record data of the second user account in the second historical duration; and
in response to receiving the fourth message, sending, by the second terminal, the second data to the server.

3. The method according to claim 1 or 2, wherein the first user input comprises any one of a start operation performed by a first user on the first home device, a turn-off operation performed by the first user on the first home device, a press operation performed by the first user on the first home device, and a touch operation performed by the first user on the first home device.

4. The method according to any one of claims 1 to 3, wherein the first home device comprises an identity recognition unit, and the identity recognition unit is configured to obtain a personal biometric feature of a user; and
the sending, by the first home device, a first message in a Bluetooth manner in response to receiving a first user input comprises:
in response to an operation performed by the first user on the identity recognition unit, determining, by the first home device based on a personal biometric feature of the first user obtained by the identity recognition unit, that the first user corresponds to the first account; and
sending, by the first home device, the first message in the Bluetooth manner.

5. The method according to any one of claims 1 to 4, wherein the first home device comprises a smart toothbrush, a smart cup, and a smart pillow, and the first user input is one user input.

6. The method according to claim 5, wherein the first home device comprises the smart toothbrush, and the sending, by the first home device, a first message in a Bluetooth manner in response to receiving a first user input comprises:
sending, by the smart toothbrush, the first message in the Bluetooth manner in response to receiving an operation performed by the first user on a start button of the smart toothbrush.

7. The method according to claim 5, wherein the first home device comprises the smart cup, and the sending, by the first home device, a first message in a Bluetooth manner in response to receiving a first user input comprises:
sending, by the smart cup, the first message in the Bluetooth manner in response to receiving an operation of opening a cup cover of the smart cup by the first user.

8. The method according to claim 5, wherein the first home device comprises the smart pillow, and the sending, by the first home device, a first message in a Bluetooth manner in response to receiving a first user input comprises:
sending, by the smart pillow, the first message in the Bluetooth manner in response to receiving a press operation performed by a head of the first user on the smart pillow.

9. A data transmission method, applied to a first home device, wherein the first home device comprises a Bluetooth low energy module or has a Bluetooth low energy communication function, and the method comprises:
sending, by the first home device, a first message in a Bluetooth manner in response to receiving a first user input, wherein the first message comprises a first identifier, the first identifier is pre-stored in a first terminal and the first home device, the first identifier is generated based on a first account, and the first account corresponds to the first terminal and the first home device; and
after the first terminal establishes a Bluetooth transmission channel with the first home device based on the first identifier, sending, by the first home device, a second message to the first terminal through the Bluetooth transmission channel, wherein the second message comprises first data, the first data comprises usage record data of the first home device in first historical duration and the first identifier, and the first data is used to feed back usage record data of the first account in the first historical duration, wherein
the first terminal is configured to send the first data to a server in response to receiving the second message.

10. The method according to claim 9, wherein the first user input comprises any one of a start operation performed by a first user on the first home device, a turn-off operation performed by the first user on the first home device, a press operation performed by the first user on the first home device, and a touch operation performed by the first user on the first home device.

11. A data transmission method, applied to a first terminal, wherein the method comprises:
in response to receiving a first message, obtaining, by the first terminal, a first identifier, and establishing a Bluetooth transmission channel with a first home device, wherein the first message is sent by the first home device in a Bluetooth manner in response to receiving a first user input, the first message comprises the first identifier, the first identifier is pre-stored in the first terminal and the first home device, the first identifier is generated based on a first account, and the first account corresponds to the first terminal and the first home device;
receiving a second message sent by the first home device through the Bluetooth transmission channel, wherein the second message comprises first data, the first data comprises usage record data of the first home device in first historical duration and the first identifier, and the first data is used to feed back usage record data of the first account in the first historical duration; and
in response to receiving the second message, sending, by the first terminal, the first data to a server.

12. A home device, wherein the home device comprises a Bluetooth low energy module or has a Bluetooth low energy communication function, the home device comprises one or more processors and a memory, the memory stores code, and when the code is executed by the processors, the home device is enabled to perform the method according to claim 9 or 10.

13. A terminal, wherein the terminal comprises one or more processors and a memory, the memory stores code, and when the code is executed by the processors, the terminal is enabled to perform the method according to claim 11.

14. A communication system, wherein the communication system comprises a first home device, a first terminal, and a server, and the first home device comprises a Bluetooth low energy module or has a Bluetooth low energy communication function;
the first home device is configured to perform the following operations:
in response to receiving a first user input, sending, by the first home device, a first message in a Bluetooth manner, wherein the first message comprises a first identifier, the first identifier is pre-stored in the first terminal and the first home device, the first identifier is generated based on a first account, and the first account corresponds to the first terminal and the first home device; and
after the first terminal establishes a Bluetooth transmission channel with the first home device based on the first identifier, sending, by the first home device, a second message to the first terminal through the Bluetooth transmission channel, wherein the second message comprises first data, the first data comprises usage record data of the first home device in first historical duration and the first identifier, and the first data is used to feed back usage record data of the first account in the first historical duration; and
the first terminal is configured to perform the following operations:
in response to receiving the first message, obtaining, by the first terminal, the first identifier, and establishing the Bluetooth transmission channel with the first home device;
receiving the second message sent by the first home device through the Bluetooth transmission channel; and
in response to receiving the second message, sending, by the first terminal, the first data to the server.

15. A computer-readable storage medium, comprising computer instructions, and when the computer instructions are run on a home device, the home device is enabled to perform the data transmission method according to claim 9 or 10.
